# EUROPEAN PATENT SPECIFICATION

(11) **EP 4 133 985 B1**
(45) Date of publication and mention of the grant of the patent: **21.05.2025**
(21) Application number: 21764185.1
(22) Date of filing: 04.02.2021
(51) Int. Cl.: A47L 15/44, A47L 15/00, D06F 39/02, A47L 15/42

(54) **DISPENSING DEVICE AND CONTROL METHOD FOR DISPENSING DEVICE**
AUSGABEVORRICHTUNG UND STEUERUNGSVERFAHREN FÜR DIE AUSGABEVORRICHTUNG
DISPOSITIF DE DISTRIBUTION ET PROCÉDÉ DE COMMANDE POUR DISPOSITIF DE DISTRIBUTION

(30) Priority: 05.03.2020 CN 202010147786
(43) Date of publication of application: 15.02.2023
(73) Proprietor: Foshan Shunde Midea Washing Appliances Manufacturing Co., Ltd., Foshan, Guangdong 528311 (CN)
(72) Inventor: LU, Zhenliang, Foshan, Guangdong 528311 (CN); LIU, Richao, Foshan, Guangdong 528311 (CN); LI, Xiang, Foshan, Guangdong 528311 (CN); GENG, Jie, Foshan, Guangdong 528311 (CN); XU, Pingping, Foshan, Guangdong 528311 (CN)
(74) Representative: Whitlock, Holly Elizabeth Ann
(86) International application number: PCT/CN2021/075191
(87) International publication number: WO 2021/175076

(56) References cited:
- WO-A2-2005/100675
- WO-A2-2005/100675
- CN-A- 101 744 597
- CN-A- 101 744 597
- CN-A- 102 112 036
- CN-A- 104 264 422
- CN-A- 108 720 784
- CN-A- 109 700 410
- CN-A- 111 436 874
- DE-A1- 19 540 958
- DE-A1- 19 540 958

## Description

### FIELD

The present invention relates to a control method, a dispensing device, a household appliance.

### BACKGROUND

In the related art, a household appliance (such as a dishwasher) usually uses a device with an automatic dispensing function to dispense a cleaning consumable. For the device with the automatic dispensing function in the related art, in a process of dispensing the cleaning consumable, steam from the household appliance may easily enter an inside of the device with the automatic dispensing function. Therefore, quality of cleaning consumable in the device with the automatic dispensing function may be easily influenced, which does not facilitate an operation of the household appliance. DE19540958A1 relates generally to a dosing device for cleaning agents in tablet. CN101744597A relates generally to a dishwashing machine that sprays cleaning water on items to be cleaned. WO2005100675A2 relates generally to a device being structured in such a way as to prevent any deterioration and/or anomalous behaviors of elements or substances contained therein and/or of parts of the device itself.

### SUMMARY

Aspects of the invention are set out in the claims.

Additional aspects and advantages of the present disclosure will be partially set forth in the following description and partially become apparent from the following description, or they may be learned by practice of the present disclosure.

### BRIEF DESCRIPTION OF THE DRAWINGS

The above-mentioned and/or additional aspects and advantages of the present disclosure will become apparent and readily understood from the following description of embodiments in conjunction with the accompanying drawings, in which:
FIG. 1 is a schematic structural view of a dispensing device according to an embodiment of the present disclosure;
FIG. 2 is a schematic plan view of a dispensing device according to an embodiment of the present disclosure;
FIG. 3 is another schematic plan view of a dispensing device according to an embodiment of the present disclosure;
FIG. 4 is another schematic plan view of a dispensing device according to an embodiment of the present disclosure;
FIG. 5 is yet another schematic plan view of a dispensing device according to an embodiment of the present disclosure;
FIG. 6 is yet another schematic plan view of a dispensing device according to an embodiment of the present disclosure;
FIG. 7 is a schematic plan view of a storage channel and a pushing portion of a dispensing device according to an embodiment of the present disclosure;
FIG. 8 is another schematic plan view of a storage channel and a pushing portion of a dispensing device according to an embodiment of the present disclosure;
FIG. 9 is yet another schematic plan view of a storage channel and a pushing portion of a dispensing device according to an embodiment of the present disclosure;
FIG. 10 is another schematic plan view of a storage channel and a pushing portion of a dispensing device according to an embodiment of the present disclosure;
FIG. 11 is still yet another schematic plan view of a storage channel and a pushing portion of a dispensing device according to an embodiment of the present disclosure;
FIG. 12 is a schematic enlarged view of part I in FIG. 6;
FIG. 13 is a schematic structural view of a door assembly according to an embodiment of the present disclosure;
FIG. 14 is a schematic plan view of a door assembly according to an embodiment of the present disclosure;
FIG. 15 is another schematic plan view of a door assembly according to an embodiment of the present disclosure;
FIG. 16 is a schematic structural view of a household appliance according to an embodiment of the present disclosure;
FIG. 17 is another schematic structural view of a household appliance according to an embodiment of the present disclosure;
FIG. 18 is a flowchart of a control method for a dispensing device according to an embodiment of the present disclosure;
FIG. 19 is another flowchart of a control method for a dispensing device according to an embodiment of the present disclosure;
FIG. 20 is yet another flowchart of a control method for a dispensing device according to an embodiment of the present disclosure;
FIG. 21 is another flowchart of a control method for a dispensing device according to an embodiment of the present disclosure;
FIG. 22 is still yet another flowchart of a control method for a dispensing device according to an embodiment of the present disclosure;
FIG. 23 is yet another flowchart of a control method for a dispensing device according to an embodiment of the present disclosure;
FIG. 24 is still yet another flowchart of a control method for a dispensing device according to an embodiment of the present disclosure; and
FIG. 25 is another flowchart of a control method for a dispensing device according to an embodiment of the present disclosure.

Household appliance 1000, cavity 1001, accommodation space 1002, door body assembly 100, door body 101, dispensing device 10, storage tube 11, storage channel 111, feeding inlet 112, discharging outlet 113, cover plate 114, pushing portion 12, through opening 121, transmission assembly 13, first drive motor 131, first transmission component 132, second push rod 133, first tooth portion 1331, feeding channel 14, feed opening 141, movable assembly 15, first movable block 16, second movable block 17, drive assembly 18, second drive motor 181, second transmission component 182, first driving wheel 1821, first driven wheel 1822, second driven wheel 1823, third driven wheel 1824, first push rod 183, second tooth portion 1831, third push rod 184, third tooth portion 1841, abutting portion 19, sensor 20, third position detector 21, fourth position detector 22, feeding tube 23, first position detector 24, second position detector 25, and detection assembly 26.

### DETAILED DESCRIPTION

Embodiments of the present disclosure will be described in detail below with reference to embodiments thereof as illustrated in the accompanying drawings, throughout which the same or similar elements, or the elements having same or similar functions, are denoted with same or similar reference numerals. The embodiments described below with reference to the accompanying drawings are illustrative merely and are intended to explain, rather than limiting, the present disclosure.

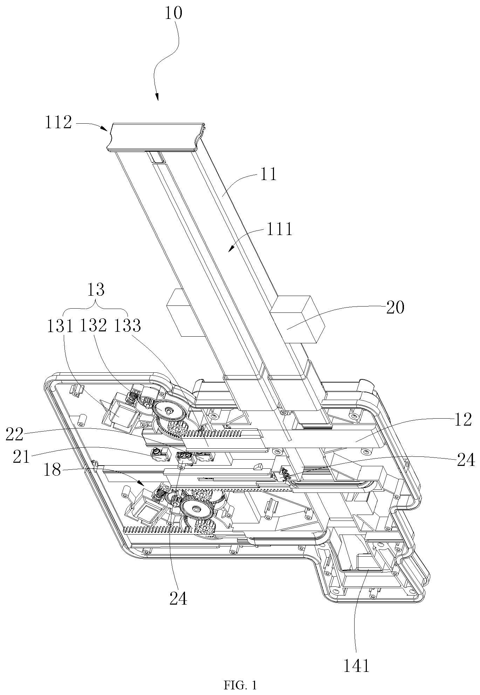

Referring to FIG. 1 to FIG. 3, a dispensing assembly 10 according to embodiments of the present disclosure is provided. The dispensing assembly 10 includes a storage tube 11 and a pushing portion 12. A storage channel 111 is defined in the storage tube 11, and is configured to store a plurality of detergent tabs therein. The pushing portion 12 is movably arranged relative to the storage tube 11, and is movable between a third position and a fourth position. The pushing portion 12 is configured to prevent the detergent tabs from falling out of the storage channel 111when in the third position, and to enable at least one detergent tab to fall out of the storage channel 111 when in the fourth position.

With the dispensing device 10 according to the embodiments of the present disclosure, the storage tube 11 is capable of storing the plurality of detergent tabs therein, and the detergent tabs are dispensed through the movement of the pushing portion 12. Therefore, the number of times the detergent tabs are added to the dispensing device 10 by a user can be reduced, which provides convenience for the user. Thus, it is possible for the user to conveniently use the dispensing device 10, and user experience is improved.

In the embodiments of the present invention, the user may store the plurality of detergent tabs into the storage channel 111 of the storage tube 11, and then controls the pushing portion 12 to move between the third position and the fourth position, to realize the dispensing of the detergent tabs. In this way, when the user uses the dispensing device 10 each time, there is no need for the user to first place the detergent tabs into the dispensing device 10, which can reduce the number of times the detergent tabs are added into the dispensing device 10 by the user, and convenience can be provided for the user. Thus, it is possible for the user to conveniently use the dispensing device 10, and user experience is improved.

Further, the storage tube 11 may be made of a plastic material. The plastic material has characteristics such as economical price, easy availability, and easy processing. Thus, manufacturing cost of the storage tube 11 can be reduced, and mass production of the storage tube 11 is facilitated, which in turn facilitates mass production of the dispensing device 10. In addition, in this way, it is possible to reduce an overall weight of the dispensing device 10 to enable the user to conveniently use the dispensing device 10, which improves the user experience. It should be understood that, in other embodiments, the storage tube 11 may also be made of other materials. A specific material of the storage tube 11 may be selected as desired. For example, in some embodiments, the storage tube 11 may also be made of a material such as stainless steel, iron, or the like, and the specific material of the storage tube 11 is not limited herein.

In some embodiments, the detergent tab may be circular, rectangular, polygonal, etc., and a specific shape of the detergent tab may be selected as desired, which is not limited herein.

Referring to FIG. 1 to FIG. 3 again, further, the storage tube 11 has a feeding inlet 112 and a discharging outlet 113. Both the feeding inlet 112 and the discharging outlet 113 are in communication with the storage channel 111. The pushing portion 12 is located at the discharging outlet 113. In this way, it is possible to control the falling of the detergent tab when the pushing portion 12 moves between the third position and the fourth position, which has a simple structure and is easy to be implemented.

In some embodiments, a cover plate 114 may be hinged at the feeding inlet 112. The cover plate 114 is configured to open or close the feeding inlet 112 through rotation. Therefore, the feeding inlet 112 can be opened and closed through rotating the cover plate 114 by the user, which is convenient and quick. Of course, in other embodiments, the feeding inlet 112 may be also opened or closed by the cover plate 114 in other manners. For example, in other embodiments, the cover plate 114 may be movably arranged at the feeding inlet 112. In this case, the feeding inlet 112 may be opened or closed during the movement of the cover plate 114. Selection may be made as desired, which is not limited herein.

Further, the cover plate 114 may be provided with a sealing ring (not shown). In this way, when the feeding inlet 112 is closed by the cover plate 114, sealing effect of the storage channel 111 is better. Thus, it is possible to prevent external air from entering the storage channel 111, which may pollute the detergent tabs in the storage channel 111. Thus, storage of the detergent tabs can be facilitated.

In some embodiments, the storage channel 111 has an elongated shape to allow the plurality of detergent tabs to be arranged sequentially. For example, the storage channel 111 may allow the plurality of detergent tabs to be sequentially arranged from top to bottom.

In this way, it is possible for the detergent tabs to be easily arranged sequentially. Therefore, more detergent tabs may be stored in the storage channel 111. In addition, the storage channel 111 of the elongated shape is also beneficial for the falling of the detergent tab under gravity to prevent the detergent tabs from being blocked in the storage channel 111.

In the embodiment, the storage channel 111 has a rectangular cross section. In some embodiments, in order for better matching of the detergent tab with the storage channel 111, the detergent tab may be designed to have a rectangular shape. Of course, in other embodiments, the cross section of the storage channel 111 may also be other shapes, which may be set as desired. It should be noted that, when the storage channel 111 has other shapes, the shape of the detergent tab may also be correspondingly changed, to enable better matching to be formed between the detergent tab and the storage channel 111.

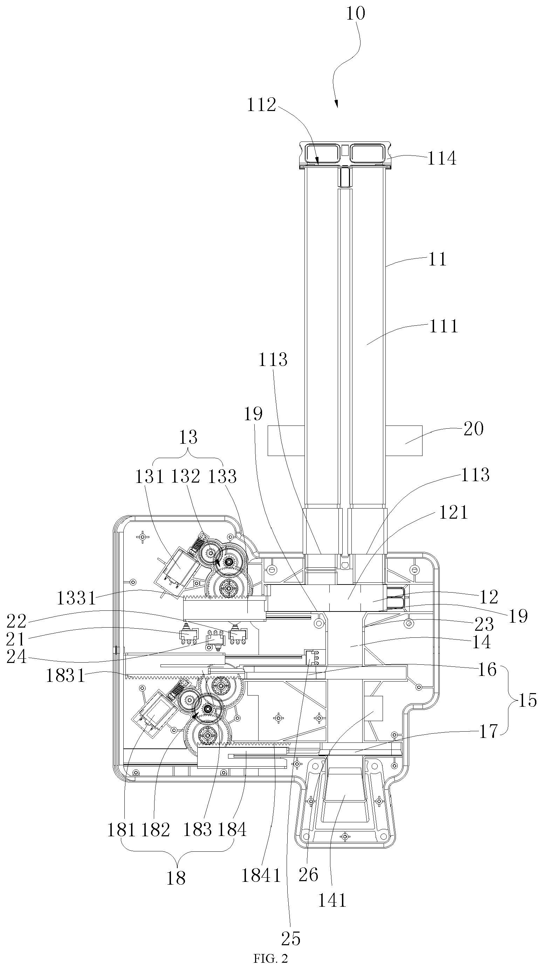

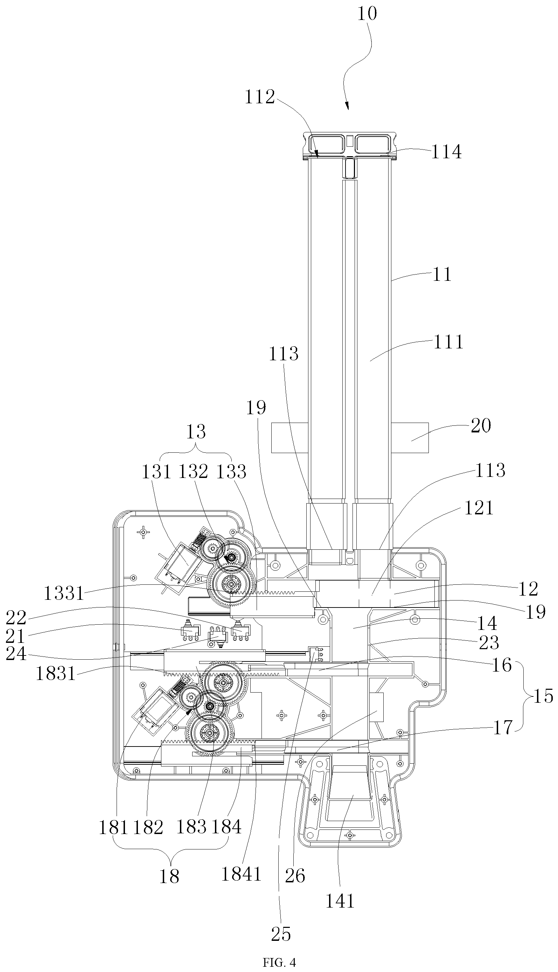

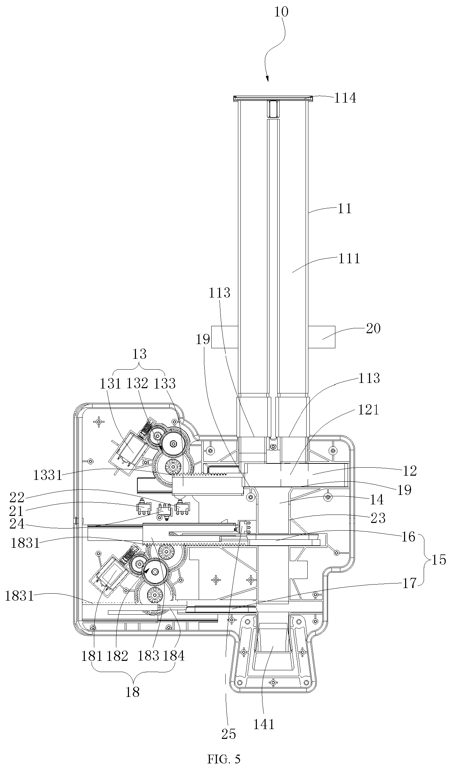

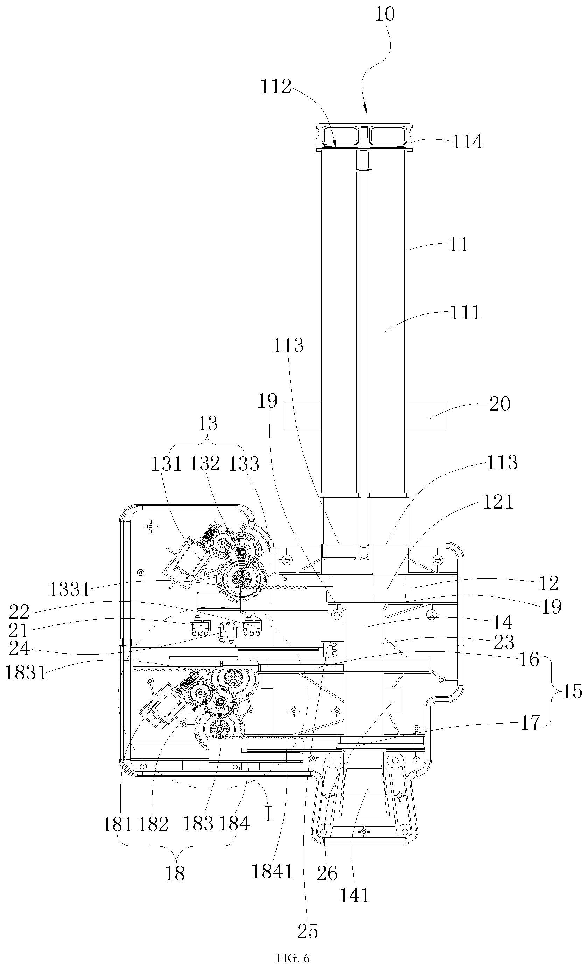

Referring to FIG. 2 to FIG. 6, in some embodiments, a plurality of storage channels 111 is provided and arranged in parallel. When the pushing portion 12 is located in the fourth position, at least one of the detergent tabs in one corresponding storage channel 111 falls out of the storage channel 111.

Through the arrangement of the plurality of storage channels 111, more detergent tabs may be stored in the dispensing device 10. Therefore, there is no need for the user to add the detergent tabs into the storage channel 111 frequently, which reduces the number of times the detergent tabs are added into the dispensing device 10 by the user. Thus, it is possible for the user to conveniently use the dispensing device 10, and user experience is improved.

In addition, the plurality of storage channels 111 is arranged in parallel. In a further embodiment, the plurality of storage channels 111 is arranged in parallel in a length direction of the dispensing device 10. In this way, the falling of the detergent tab can be easily controlled when the pushing portion 12 moves, and a thickness of the dispensing device 10 can be reduced. Thus, light and thin design of the dispensing device 10 is facilitated.

It should be noted that, in the embodiment, one storage tube 11 is provided, and the plurality of storage channels 111 is formed in the storage tube 11. Of course, in other embodiments, a plurality of storage tubes 11 may be provided, and one storage channel 111 is formed in each of the plurality of storage tubes 11. The number of storage tubes may be set as desired, which is not limited herein.

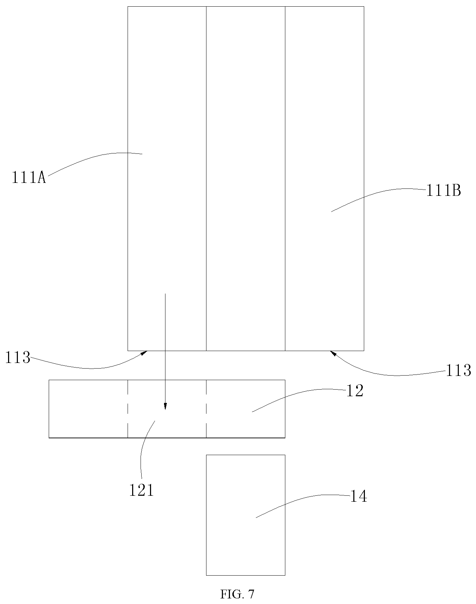

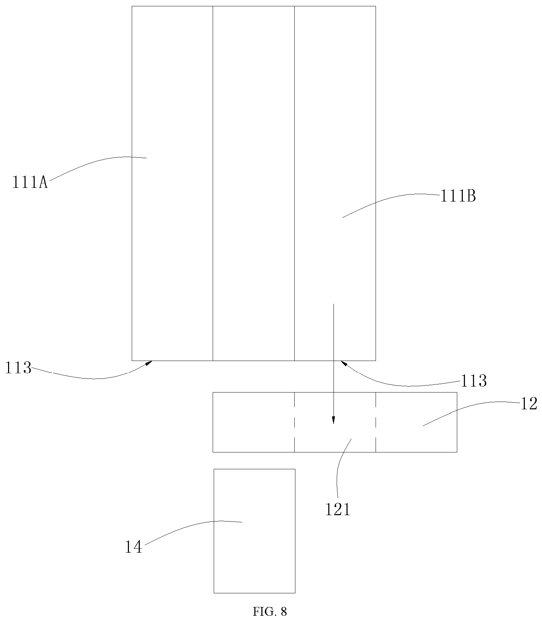

Referring to FIG. 7 and FIG. 8, in some embodiments, the pushing portion 12 is configured to be movable between the third position and the fourth position to enable the detergent tabs in the plurality of storage channels 111 to alternately fall out of the storage channel 111.

This alternate falling of the detergent tabs will be described below as an example.

Referring to FIG. 7, in one example, the storage channel 111 includes a storage channel 111A and a storage channel 111B that are arranged in parallel. In a first dispensing process, the pushing portion 12 is controlled to be positioned in a fourth position of the storage channel 111A. In this case, a detergent tab in the storage channel 111A falls out of the storage channel 111A as illustrated by an arrow in FIG. 7. Referring to FIG. 8, in a second dispensing process, the pushing portion 12 is controlled to be positioned in a fourth position of the storage channel 111B. In this case, a detergent tab in the storage channel 111B falls out of the storage channel 111B as illustrated by an arrow in FIG. 8. Referring to FIG. 7 again, in a third dispensing process, the pushing portion 12 is controlled again to be positioned in the fourth position of the storage channel 111A. In this case, the detergent tab in the storage channel 111A falls out of the storage channel 111A. Referring to FIG. 8 again, in a fourth dispensing process, the pushing portion 12 is controlled again to be positioned in the fourth position of the storage channel 111B. In this case, the detergent tab in the storage channel 111B falls out of the storage channel 111B. The above operations are repeated, until the detergent tabs in the storage channel 111A and the storage channel 111B are used up.

Of course, in other embodiments, the dispensing device 10 may also perform the dispensing operation in other manners. For example, the storage channel 111 includes a storage channel 111A and a storage channel 111B that are arranged in parallel. Three detergent tabs are stored in each of the storage channel 111A and the storage channel 111B. Referring to FIG. 7, in a first dispensing process, the pushing portion 12 is controlled to be positioned in the fourth position of the storage channel 111A. In this case, the detergent tab in the storage channel 111A falls out of the storage channel 111A. Referring to FIG. 7 again, in a second dispensing process, the pushing portion 12 is controlled again to be positioned in the fourth position of the storage channel 111A. In this case, the detergent tab in the storage channel 111A falls out of the storage channel 111A. Referring to FIG. 7 again, in a third dispensing process, the pushing portion 12 is controlled again to be positioned in the fourth position of the storage channel 111A. In this case, the detergent tab in the storage channel 111A falls out of the storage channel 111A. At this time, the detergent tabs in the storage channel 111A are used up.

Further, referring to FIG. 8, in a fourth dispensing process, the pushing portion 12 is controlled to be positioned in the fourth position of the storage channel 111B. In this case, the detergent tab in the storage channel 111B falls out of the storage channel 111B. Referring to FIG. 8 again, in a fifth dispensing process, the pushing portion 12 is controlled again to be positioned in the fourth position of the storage channel 111B. In this case, the detergent tab in the storage channel 111B falls out of the storage channel 111B. Referring to FIG. 8 again, in a sixth dispensing process, the pushing portion 12 is controlled again to be positioned in the fourth position of the storage channel 111B. In this case, the detergent tab in the storage channel 111B falls out of the storage channel 111B. At this time, the detergent tabs in the storage channel 111B are used up.

It can be seen from the above that there is a plurality of dispensing orders for the detergent tabs, which may be selected as desired, which is not limited herein.

Referring to FIG. 1 to FIG. 6, in some embodiments, the dispensing device 10 includes a transmission assembly 13 connected to the pushing portion 12. The transmission assembly 13 is configured to drive the pushing portion 12 to move between the third position and the fourth position.

With this arrangement, it is possible to realize the movement of the pushing portion 12, which has the simple structure and is easy to be implemented.

Referring to FIG. 1 to FIG. 6 again, in some embodiments, the transmission assembly 13 includes a first drive motor 131, a first transmission component 132, and a second push rod 133. The first drive motor 131 is configured to drive the first transmission component 132 to rotate. The second push rod 133 is connected to the pushing portion 12.

When the first transmission component 132 is driven by the first drive motor 131 to rotate, the second push rod 133 is driven by the first transmission component 132 to move, to enable the pushing portion 12 to move between the third position and the fourth position.

The first drive motor 131 is capable of driving the first transmission component 132 to rotate, and with the rotation of the first transmission component 132, the second push rod 133 is driven to move. Since the second push rod 133 is connected to the pushing portion 12, with the movement of the second push rod 133, the pushing portion 12 can be driven to move, to enable the pushing portion 12 to move between the third position and the fourth position, which has the simple structure and is easy to be implemented.

It can be understood that, in other embodiments, the transmission assembly 13 may also have other structures. For example, in one embodiment, the transmission assembly 13 includes a spring and a pulling rope. One end of the spring is connected to the pushing portion 12, and another end of the spring is fixed to an inner wall of the dispensing device 10. One end of the pulling rope is connected to an end of the pushing portion 12 away from the spring, and another end of the pulling rope is exposed from the dispensing device 10. With this arrangement, pulling the rope by the user may provide a pulling force in a first direction to pull the pushing portion 12, enabling the pushing portion 12 to move in the first direction. In a process of pulling the pushing portion 12, the spring is deformed. In this case, the spring may provide a pulling force in a second direction to pull the pushing portion 12, enabling the pushing portion 12 to move in the second direction. The first direction is opposite to the second direction.

With this arrangement, when the pulling force in the first direction provided by the user is greater than the pulling force in the second direction, the pushing portion 12 can move in the first direction, and when the pulling force in the first direction provided by the user is smaller than the pulling force in the second direction, the pushing portion 12 can move in the second direction. That is, the movement of the pushing portion 12 in the first direction or the second direction can be realized through using the rope and the spring by the user, which has the simple structure and is easy to be implemented. For another example, the transmission assembly 13 may also have a hydraulic structure, an oil-hydraulic structure, or the like, and a specific type of the transmission assembly13 may be selected as desired, which is not limited herein.

Referring to FIG. 1 to FIG. 6, in some embodiments, a first tooth portion 1331 is disposed on a side of the second push rod 133 facing towards the first transmission component 132. The first tooth portion 1331 is engaged with the first transmission component 132.

With this arrangement, with the rotation of the first transmission component 132, the second push rod 133 can be driven to move, to further realized the movement of the pushing portion 12.

Here, the first transmission component 132 may include one, two, three or more gears. The number of gears may be selected in detail as desired, which is not limited herein. It should be noted that, when the first transmission component 132 includes a plurality of gears, the plurality of gears may be engaged with each other.

Referring to FIG. 1 to FIG. 6, in some embodiments, the pushing portion 12 is formed with a through opening 121penetrating the pushing portion 12. When the pushing portion 12 is located in the fourth position, the through opening 121 is in communication with the storage channel 111. Therefore, the detergent tabs in the storage channel 111 can fall into the through opening 121 and out of the storage channel 111.

With this arrangement, when the pushing portion 12 is located in the fourth position, the through opening 121 is in communication with the storage channel 111. That is, only when the pushing portion 12 moves from the third position to the fourth position, the detergent tabs in the storage channel 111 can fall into the through opening 121 and out of the storage channel 111. Therefore, it is possible to avoid incorrect falling of the detergent tabs in the storage channel 111, which further facilitates the operation of the dispensing device 10.

Here, the through opening 121 may be circular, rectangular, triangular, or other polygons, and a specific shape of the through opening 121 may be set as desired, which is not limited herein.

It should be noted that the through opening 121 has a greater size than the detergent tab, which facilitates the movement of the detergent tab in the through opening 121. Thus, it is possible to prevent the detergent tab from being stuck in the through opening 121, which may affect normal operation of the dispensing device 10.

In the embodiment, the dispensing device 10 includes a plurality of abutting portions 19. When the pushing portion 12 is located in the fourth position, one side of the through opening 121 facing away from the storage channel 111 is at least partially closed by the abutting portion 19. Therefore, it is possible to prevent the detergent tab in the through opening 121 from directly falling from the through opening 121 when the pushing portion 12 is positioned in the fourth position, which is beneficial to control the dispensing of the detergent tab.

In some embodiments, one, two, three or more through openings 121 may be provided, and the specific number of through openings 121 may be set as desired, which is not limited herein.

Referring to FIG. 1 to FIG. 6, the dispensing device 10 includes a feeding channel 14 When the pushing portion 12 is located in the fifth position, the detergent tab in the storage channel 111 passes through the through opening 121 and falls into the feeding channel 14.

The arrangement of the feeding channel 14 enables the detergent tabs to fall into a predetermined position, which has the simple structure and is easy to be implemented.

In the embodiment, one feeding channels 14 is provided. Of course, in other embodiments, a plurality of the feeding channels 14 may be provided, and a specific number of the feeding channels 14 may be selected as desired, which is not limited herein.

Further, the feeding channel 14 has a greater size than the detergent tab, which facilitates a movement of the detergent tab in the feeding channel 14. Therefore, it is possible to prevent the detergent tab from being stuck in the feeding channel 14, which may affect the normal operation of the dispensing device 10.

Here, the feeding channel 14 is located on a side of the pushing portion 12 facing away from the storage channel 111.

Further, the feeding channel 14 has a feed opening 141. The detergent tab in the feeding channel 14 falls out of the feeding channel 14 through the feed opening 141.

A specific positional relationship among the third position, the fourth position, and the fifth position will be illustrated below.

Referring to FIG. 7 to FIG. 11, the storage channel 111 includes the storage channel 111A and the storage channel 111B arranged in parallel. The pushing portion 12 includes one through opening 121. One feeding channel 14 is provided and positioned in the middle of the storage channel 111A and the storage channel 111B.

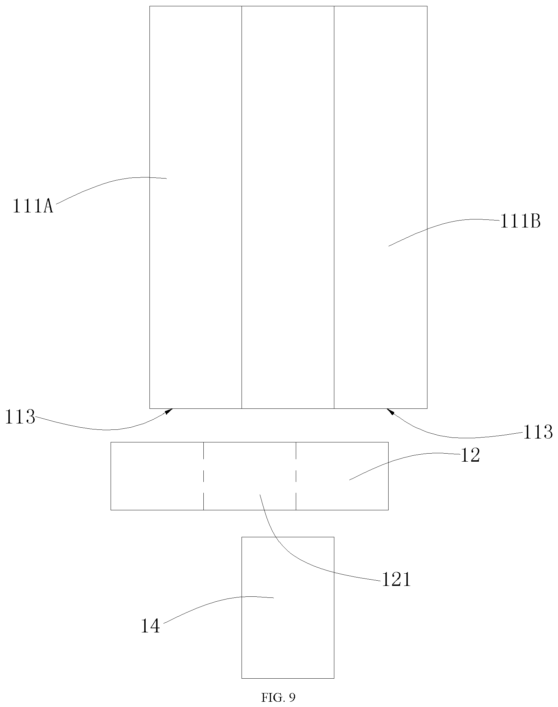

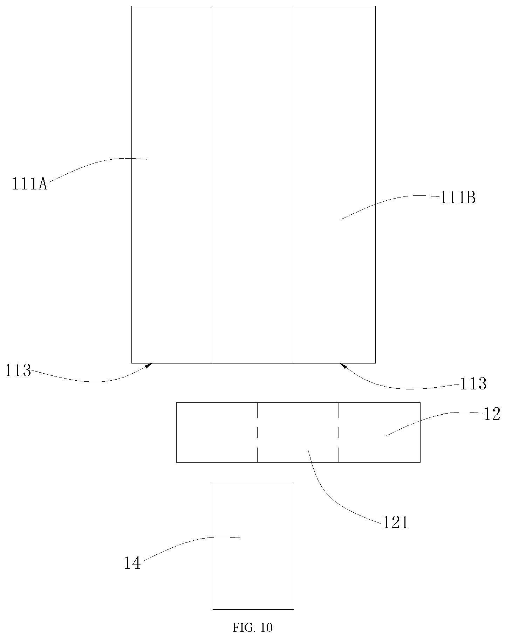

Referring to FIG. 9 and FIG. 10, when the pushing portion 12 is located in the third position, the through opening 121 is staggered with a discharging outlet 113 of the storage channel 111A and a discharging outlet 113 of the storage channel 111B. In this case, the through opening 121 is also staggered with the feeding channel 14. That is, in this case, the detergent tabs in the storage channel 111A and the storage channel 111B cannot fall into the through opening 121, and the detergent tabs in the through opening 121 cannot fall into the feeding channel 14, either.

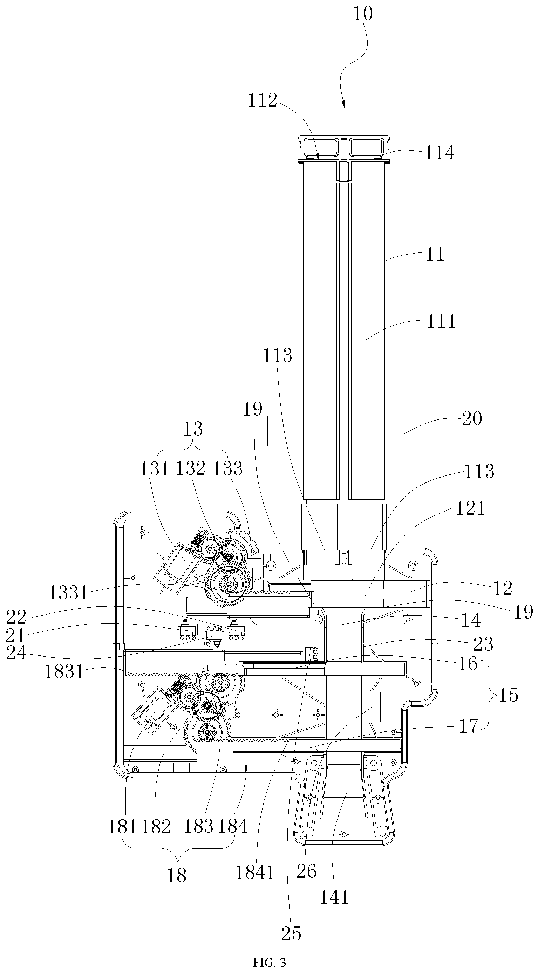

Referring to FIG. 3, FIG. 7 and FIG. 8, when the pushing portion 12 is located in the fourth position, the through opening 121 is in communication with one of the discharging outlet 113 of the storage channel 111A and the discharging outlet 113 of the storage channel 111B. Another side of the through opening 121 is closed by the abutting portion 19. That is, in this case, the detergent tab in the storage channel 111A or the storage channel 111B can fall into the through opening 121, and is abutted against the abutting portion 19. Therefore, the detergent tab in the through opening 121 cannot fall into the feeding channel 14.

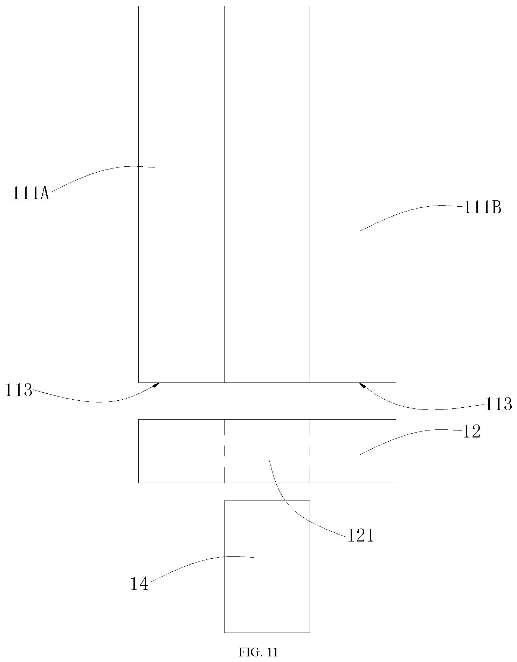

Referring to FIG. 11, when the pushing portion 12 is located in the fifth position, the through opening 121 is staggered with the discharging outlet 113 of the storage channel 111A and the discharging outlet 113 of the storage channel 111B, and the through opening 121 is in communication with and the feeding channel 14. That is, in this case, the detergent tab in the through opening 121 can fall into the feeding channel 14.

Thus, the falling of the detergent tab in the storage channel 111 can be controlled by allowing the pushing portion 12 to move among the third position, the fourth position, and the fifth position, which has the simple structure and is easy to be implemented.

Referring to FIG. 1 to FIG. 6, in some embodiments, a movable assembly 15 is disposed in the feeding channel 14. The movable assembly 15 is movable to block or unblock the feeding channel 14. The movable assembly 15 is configured to enable the detergent tabs in the feeding channel 14 to fall out of the feeding channel 14 when the feeding channel 14 is unblocked.

The feeding channel 14 is blocked or unblocked through the arrangement of the movable assembly 15. Therefore, the movement of the detergent tab in the feeding channel 14 can be conveniently controlled to prevent a solid detergent falling into the feeding channel 14 through the through opening 121 from directly falling out of the feeding channel 14. In addition, when the feeding channel 14 is blocked by the movable assembly 15, moisture or other foreign materials outside the feeding channel 14 may be blocked by the movable assembly 15 when entering the feeding channel. Thus, it is possible to prevent the moisture or other foreign materials outside the feeding channel 14 from entering the storage channel 111 through the feeding channel 14, which may affect quality of the detergent tabs in the storage channel 111. That is, the movable assembly 15 has advantages such as moisture-proof, dustproof, and movement controlling of the detergent tab.

In the embodiment, the movable assembly 15 is plate-shaped. A plurality of sliding channels is formed in the feeding channel 14, and is in communication with the feeding channel 14. The movable assembly 15 is configured to move into the feeding channel 14 through the plurality of sliding channels to block the feeding channel 14, or move outwards from the feeding channel 14 through the plurality of sliding channels to unblock the feeding channel 14. The arrangement of the plurality of sliding channels may guide the movable assembly 15 to avoid an inaccurate movement of the movable assembly 15, which may cause the feeding channel 14 not to be blocked by the movable assembly 15.

With the arrangement of the plurality of sliding channels, the movable assembly 15 moves along the sliding channels to block or unblock the feeding channel 14, which has the simple structure and is easy to be implemented.

Referring further to FIG. 1 to FIG. 6, in some embodiments, the movable assembly 15 includes a first movable block 16 and a second movable block 17. The first movable block 16 and the second movable block 17 are disposed in the feeding channel 14 and spaced apart from each other. The first movable block 16 is located between the second movable block 17 and the pushing portion 12. When the feeding channel 14 is blocked by the first movable block 16, the second movable block 17 can block or unblock the feeding channel 14.

When the first movable block 16 allows the feeding channel 14 to be unblocked, the second movable block 17 can block or unblock the feeding channel 14.

With this arrangement, the movement of the detergent tab in the feeding channel 14 can be controlled by the first movable block 16 and the second movable block 17. Thus, the control effect is better.

Further, when the first movable block 16 allows the feeding channel 14 to be blocked or unblocked, the second movable block 17 can block or unblock the feeding channel 14. In this way, when the first movable block 16 or the second movable block 17 is in operation, one of the first movable block 16 or the second movable block 17 can block the feeding channel 14. Therefore, in a process of dispensing the detergent tab, it is possible to prevent external air from entering the feeding channel 14 into the storage channel 111 through the feeding channel 14. Thus, it is beneficial for protecting the detergent tabs in the storage channel 111.

For example, when the feeding channel 14 is blocked by the first movable block 16, the detergent tab is located on the first movable block 16. At this time, the second movable block 17 can block or unblock the feeding channel 14. In this way, it is possible to prevent the external air from entering the storage channel 111 through the first movable block 16. Thus, it is beneficial for storage of the detergent tabs in the storage channel 111. When the first movable block 16 allows the feeding channel 14 to be unblocked, the detergent tab on the first movable block 16 falls onto the second movable block 17. In this case, the second movable block 17 can block the feeding channel 14. In this way, it is possible to prevent the external air from entering a region between the second movable block 17 and the first movable block 16, to further prevent air between the second movable block 17 and the first movable block 16 from enter the storage channel 111 through the first movable block 16. Thus, it is beneficial for the storage of the detergent tabs in the storage channel 111. When the second movable block 17 allows the feeding channel 14 to be unblocked, the detergent tab on the second movable block 17 falls out of the feeding channel 14. At this time, the feeding channel 14 is blocked by the first movable block 16. Therefore, it is possible to prevent air in a region between the second movable block 17 and the first movable block 16 from enter the storage channel 111 through the first movable block 16. Thus, it is beneficial for the storage of the detergent tabs in the storage channel 111.

It can be known from above that cooperation between the first movable block 16 and the second movable block 17 can prevent the external air from entering the storage channel 111 to further facilitate the storage of the detergent tab in the storage channel 111.

Referring to FIG. 1 to FIG. 6 the dispensing device 10 includes a drive assembly 18 connected to the first movable block 16 and the second movable block 17. The drive assembly 18 is configured to drive the first movable block 16 and the second movable block 17 to move.

The first movable block 16 and the second movable block 17 is driven to move by one drive assembly 18. Therefore, it is not necessary to provide two drive assemblies 18 to drive the first movable block 16 and the second movable block 17 to move, respectively. Thus, a manufacturing cost of the dispensing device 10 can be reduced, which facilitates mass production of the dispensing device 10.

It should be understood that, in other embodiments, two drive assemblies 18 may also be provided to drive the first movable block 16 and the second movable block 17 to move, respectively, which may be designed as desired and is not limited herein.

Referring further to FIG. 1 to FIG. 6, in some embodiments, the drive assembly 18 includes a second drive motor 181, a second transmission component 182, a first push rod 183, and a third push rod 184. The second drive motor 181 is configured to drive the second transmission component 182 to rotate. The first push rod 183 is connected to the first movable block 16. The third push rod 184 is connected to the second movable block 17.

When the second transmission component 182 is driven by the second drive motor 181 to rotate, the first push rod 183 and the third push rod 184 is driven by the second transmission component 182 to move, to drive the first movable block 16 and the second movable block 17 to move.

The second drive motor 181 is capable of driving the second transmission component 182 to rotate. With the rotation of the second transmission component 182, the first push rod 183 and the third push rod 184 are driven to move. Since the first push rod 183 is connected to the first movable block 16, and the third push rod 184 is connected to the second movable block 17, with the movements of the first push rod 183 and the third push rod 184, the first movable block 16 and the second movable block 17 can be driven to move, which in turn enables the first movable block 16 and the second movable block 17 to block or unblock the feeding channel 14, which has the simple structure and is easy to be implemented.

In the embodiments of the present disclosure, the movements of the first movable block 16 and the second movable block 17 may be implemented by one drive assembly 18. That is, in the embodiments of the present disclosure, the movements of the first movable block 16 and the second movable block 17 are driven in a linkage manner. Of course, in other embodiments, the movements of the first movable block 16 and the second movable block 17 may also be driven in a separate control manner. For example, two transmission assemblies 13 may be provided to respectively drive the movements of the first movable block 16 and the second movable block 17. The specific arrangement may be designed as desired, which is not limited herein.

Referring to FIG. 1 to FIG. 6 again, in some embodiments, a second tooth portion 1831 is disposed on a side of the first push rod 183 facing towards the second transmission component 182. A third tooth portion 1841 is provided on a side of the third push rod 184 facing towards the second transmission component 182. The second tooth portion 1831 and the third tooth portion 1841 are engaged with the second transmission component 182.

With this arrangement, with the rotation of the second transmission component 182, the first push rod 183 and the third push rod 184 can be driven to move, to further realize the movements of the first movable block 16 and the second movable block 17.

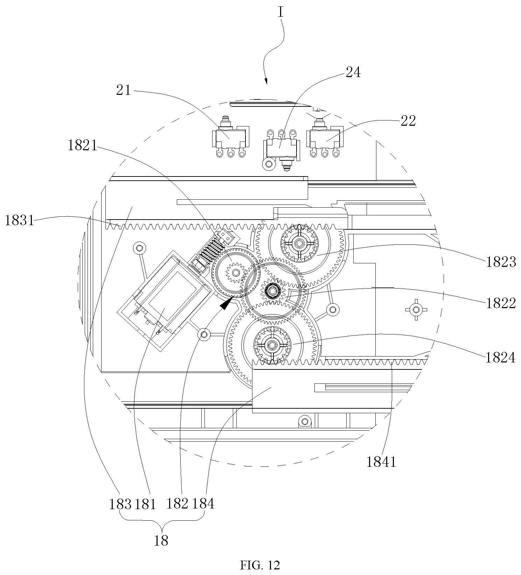

Referring to FIG. 1 to FIG. 6 and FIG. 12, in some embodiments, the second transmission component 182 may include a first driving wheel 1821, a first driven wheel 1822, a second driven wheel 1823, and a third driven wheel 1824. The first driving wheel 1821 is engaged with the second drive motor 181. The first driving wheel 1821 is engaged with the first driven wheel 1822. The second driven wheel 1823 and the third driven wheel 1824 are engaged with the first driven wheel 1822. The second tooth portion 1831 is engaged with the second driven wheel 1823. The third tooth portion 1841 is engaged with the third driven wheel 1824. The second tooth portion 1831 and the third tooth portion 1841 are opposite to each other. When the second drive motor 181 is in operation, the second drive motor 181 can drive the first driving wheel 1821 to rotate. When the first driving wheel 1821 rotates, the first driving wheel 1821 can drive the first driven wheel 1822 to rotate. Since the second driven wheel 1823 and the third driven wheel 1824 are engaged with the first driven wheel 1822, when the first driven wheel 1822 rotates, the first driven wheel 1822 can drive the second driven wheel 1823 and the third driven wheel 1824 to rotate in opposite directions. Since the second driven wheel 1823 is engaged with the second tooth portion 1831, and the third driven wheel 1824 is engaged with the third tooth portion 1841, when the second driven wheel 1823 and the third driven wheel 1824 rotate, the first push rod 183 and the third push rod 184 can be driven to move in opposite directions by the second tooth portion 1831 and the third tooth portion 1841, to further allow the first movable block 16 and the second movable block 17 to move in opposite directions. That is, linkage between the first movable block 16 and the second movable block 17 may be implemented by one second transmission component 182, which has the simple structure and is easy to be implemented.

It should be understood that in other embodiments, the second transmission component 182 may also include a plurality of driving wheels or a plurality of driven wheels. For example, in one example, the second transmission component 182 may include two, three, four, five, or more driving wheels, and may include four, five, six, or more driven wheels. The specific number of the driving wheel and the driven wheel may be designed as desired as long as the first push rod 183 and the third push rod 184 are allowed to move in different directions, and the specific number of the driving wheels and the driven wheels is not limited herein.

In some embodiments, the first movable block 16 and the second movable block 17 each are provided with a sealing structure (not shown). The sealing structure is configured to seal the feeding channel 14 at ends of the first movable block 16 and the second movable block 17 when the first movable block 16 and the second movable block 17 allows the feeding channel 14 to be blocked or unblocked.

Therefore, the feeding channel 14 at the ends of the first movable block 16 and the second movable block 17 can be sealed by the arrangement of the sealing structure, when he first movable block 16 and the second movable block 17 block or unblock the feeding channel 14. Thus, it is possible to prevent the external moisture from entering the storage channel 111 from the feeding channel 14 at the ends of the first movable block 16 and the second movable block 17, which is beneficial for the storage of the detergent tabs in the storage channel 111.

Here, the sealing structure may be at least one of rubber and an O-shaped ring. Of course, the sealing structure not only includes the above two structures, and in other embodiments, the sealing structure may also include other structures, and the specific structure may be designed as desired, which is not limited herein.

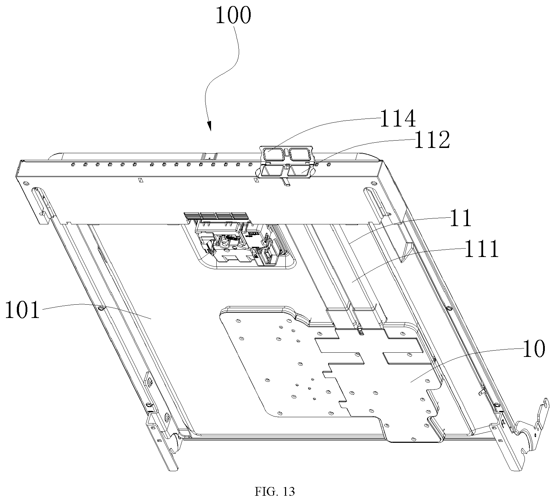

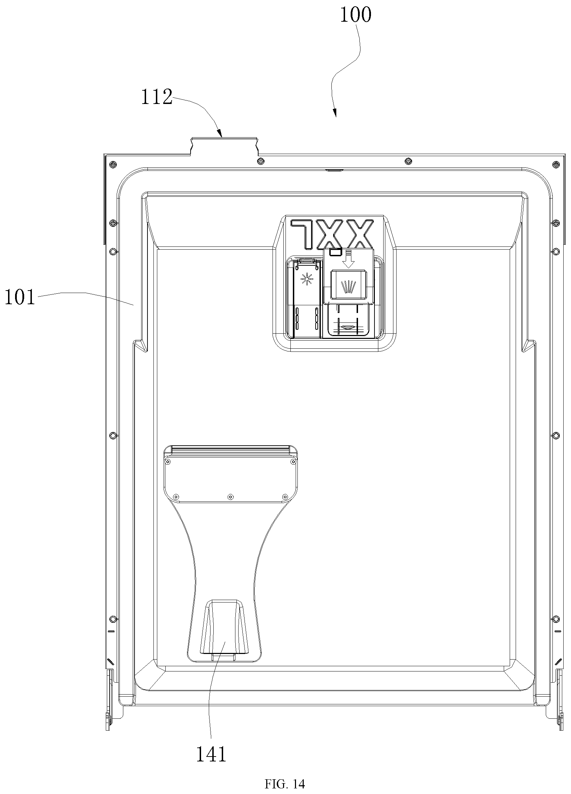

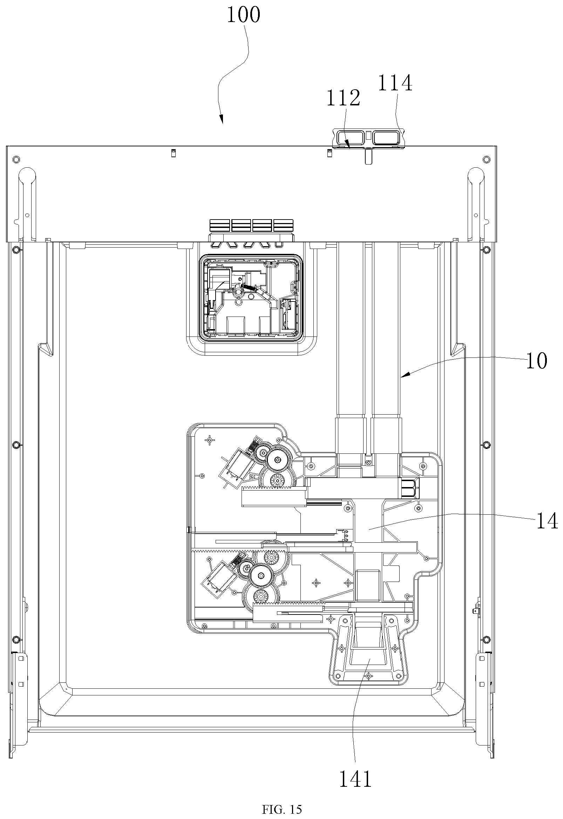

Referring to FIG. 13 to FIG. 15, embodiments of the present disclosure provide a door body assembly 100. The door body assembly 100 includes a door body 101 and the dispensing device 10 according to any one of the above embodiments. The dispensing device 10 is disposed on the door body 101.

For the door body assembly 100 of the embodiments of the present disclosure, the storage tube 11 is configured to store the plurality of detergent tabs, and the detergent tabs are then dispensed through the movement of the pushing portion 12. Therefore, the number of times the detergent tabs are added into the dispensing device 10 by the user can be reduced, which provides convenience for the user. Thus, it is possible for the user to conveniently use the dispensing device 10, and user experience is improved.

Here, the door body 101 may be a door body 101 of a household appliance 1000. The door body 101 is configured to open or close a cavity 1001 of the household appliance 1000. The dispensing device 10 is configured to dispense the detergent tabs into the cavity 1001 of the household appliance 1000. Therefore, the dispensing device 10 does not need to be additionally mounted, which is convenient and quick.

Further, the dispensing device 10 is detachably connected to the door body 101. In this way, when the dispensing device 10 is damaged, it is convenient for the user to maintain or replace the dispensing device 10. In a further embodiment, the dispensing device 10 may be screwed onto the door body 101. Of course, in other embodiments, the dispensing device 10 may be connected to the door body 101 in other manners, and the specific connection may be selected as desired, which is not limited herein.

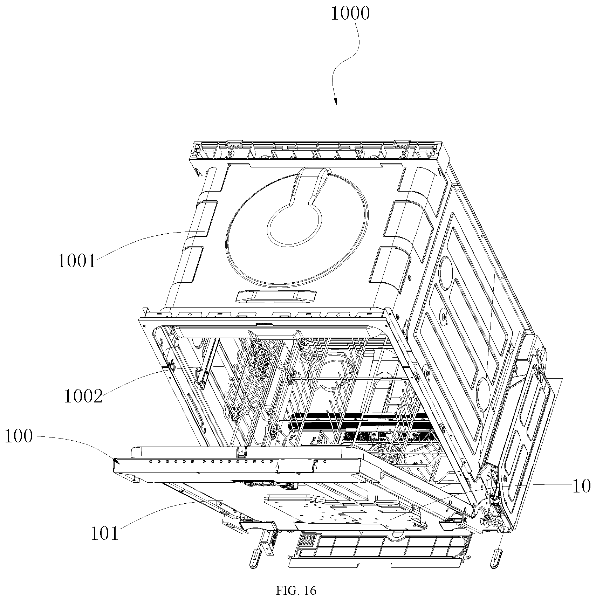

Referring to FIG. 16 to FIG. 17, embodiments of the present disclosure provide a household appliance 1000. The household appliance 1000 includes a cavity 1001 and the door body assembly 100 as described above. An accommodation space 1002 is formed in the cavity 1001. The door body assembly 100 is rotatably connected to the cavity 1001. The door body assembly 100 is configured to open or close the accommodation space 1002 with the rotation of the door body assembly 100. When the accommodation space 1002 is closed by the door body assembly 100, the dispensing device 10 is located within the accommodation space 1002.

For the household appliance 1000 of the embodiments of the present disclosure, the storage tube 11 is configured to store the plurality of detergent tabs, and the detergent tabs are then dispensed through the movement of the pushing portion 12. Therefore, the number of times the detergent tabs are added into the dispensing device 10 by the user can be reduced, which provides convenience for the user. Thus, it is possible for the user to conveniently use the dispensing device 10, and user experience is improved.

Here, the household appliance 1000 may be an electric appliance such as a dishwasher and a washing machine, in which the detergent tabs are used. Of course, the household appliance 1000 may also be other electrical appliances, and the specific type of the household appliance 1000 may be provided as desired, which is not limited herein.

Further, the door body assembly 100 is hinged to the household appliance 1000. Of course, in other embodiments, the door body assembly 100 may be connected to the household appliance 1000 in other manners such as a sliding connection or a snapping connection, and the specific connection manner may be selected as desired, which is not limited herein, as long as the cavity 1001 of the household appliance 1000 is openable or closable by the door body assembly 100.

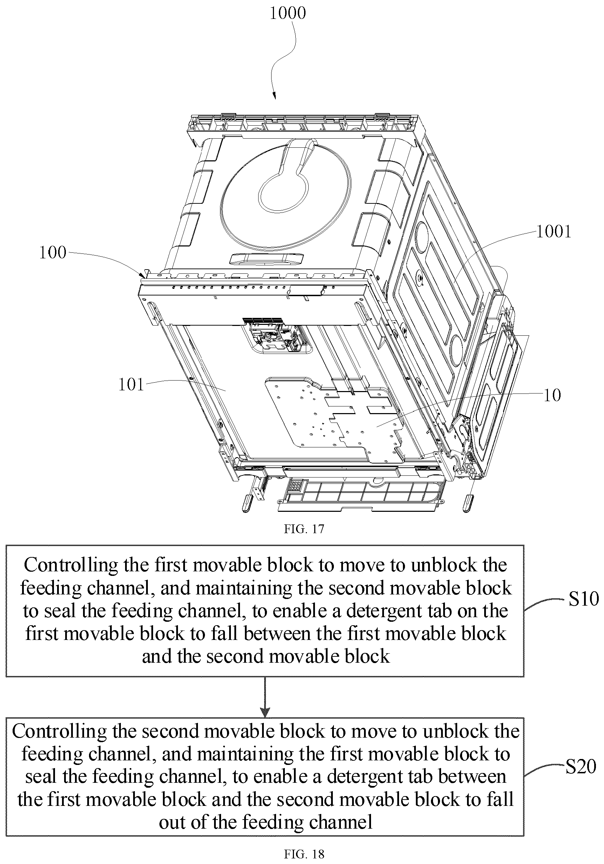

Referring to FIG. 18, the present invention provides a control method applied in a dispensing device 10. The dispensing device 10 includes a feeding tube 23, a first movable block 16, and a second movable block 17. The first movable block 16 and the second movable block 17 are disposed in the feeding tube 23 and spaced apart from each other. The feeding tube 23 has a feeding channel 14 defined therein. The first movable block 16 and the second movable block 17 are configured to block or unblock the feeding channel 14. The control method includes actions at blocks S10 and S20.

At block S10, the first movable block 16 is controlled to move to unblock the feeding channel 14, and the second movable block 17 is kept blocking the feeding channel 14, to enable a detergent tab on the first movable block 16 to fall between the first movable block 16 and the second movable block 17.

At block S20, the second movable block 17 is controlled to unblock the feeding channel 14, and the first movable block 16 is kept blocking the feeding channel 14, to enable a detergent tab between the first movable block 16 and the second movable block 17 to fall out of the feeding channel 14.

With the control method according to the embodiments of the present disclosure, when the first movable block 16 allows the feeding channel 14 to be unblocked, the second movable block 17 is kept in the state to block the feeding channel 14. When the feeding channel 14 is blocked by the first movable block 16, the second movable block 17 is kept in the state to block the feeding channel 14. That is, one of the first movable block 16 and the second movable block 17 allows the feeding channel 14 to be unblocked, and the other one of the first movable block 16 and the second movable block 17 is to block the feeding channel 14. In this way, the steam cannot enter the feeding channel 14, which in turn prevents the steam from affecting the detergent tabs in the feeding channel 14, to facilitate the operation of the dispensing device 10.

The arrangement of the feeding channel 14 enables the detergent tab to fall to a predetermined position, which facilitates the control on the falling position of the detergent tab, and it is beneficial for using of the dispensing device 10.

Here, since the detergent tab is easily decomposed when heated or damped, the decomposed detergent tab may be adhered on the feeding channel 14. In this case, an overall weight of the detergent tab may be reduced, which is not beneficial for using of the detergent tab. However, for the control method of the embodiments of the present disclosure, one of the first movable block 16 and the second movable block 17 allows the feeding channel 14 to be unblocked, and the other one of the first movable block 16 and the second movable block 17 is to block the feeding channel 14. In this way, the steam cannot enter the feeding channel 14, which in turn prevents the steam from affecting the detergent tabs in the feeding channel 14, to facilitate the operation of the dispensing device 10.

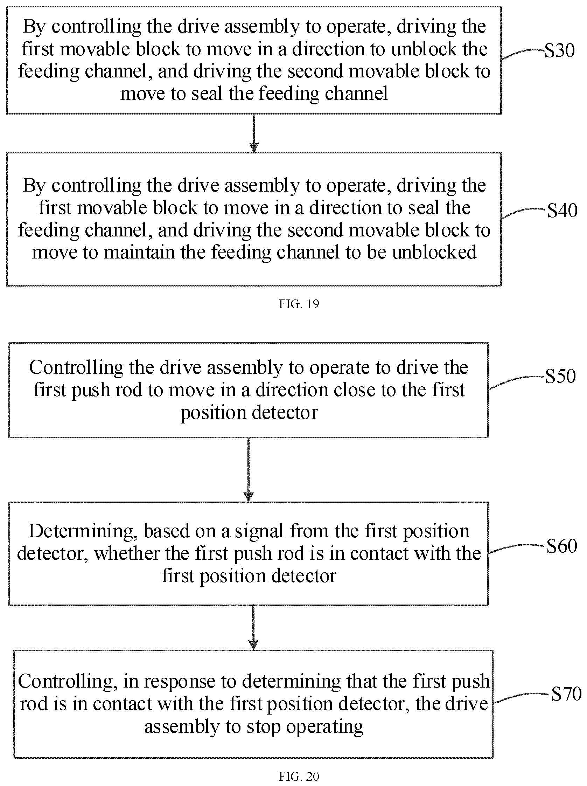

Referring to FIG. 19, in some embodiments, the dispensing device 10 includes a drive assembly 18. The drive assembly 18 is connected to the first movable block 16 and the second movable block 17. The drive assembly 18 is configured to drive the first movable block 16 and the second movable block to move 17 to move. The control method includes actions at blocks S30 and S40.

At block S30, the drive assembly 18 is controlled to operate to drive the first movable block 16 to move in a direction to unblock the feeding channel 14 and to drive the second movable block 17 to move to block the feeding channel 14.

At block S40, the drive assembly 18 is controlled to operate to drive the first movable block 16 to move in a direction to block the feeding channel 14 and to drive the second movable block 17 to move to keep the feeding channel 14 being unblocked.

With this arrangement, it is possible to realize the movements of the first movable block 16 and the second movable block 17 by one drive assembly 18. In this case, it is not necessary to provide more than one drive assemblies 18 to control the first movable block 16 and the second movable block 17, respectively. Therefore, the number of the drive assemblies 18 can be reduced, and a structure of the dispensing device 10 is simplified. Thus, cost of the dispensing device 10 is reduced, which facilitates the mass production of the dispensing device 10.

In some embodiments, a movement direction of the first movable block 16 is opposite to a movement direction of the second movable block 17.

With this arrangement, when the first movable block 16 moves in the direction to unblock the feeding channel 14, the second movable block 17 can move in the direction to block the feeding channel 14; or when the first movable block 16 moves in the direction to block the feeding channel 14, the second movable block 17 can move in the direction to unblock the feeding channel 14. Therefore, one of the first movable block 16 and the second movable block 17 allows the feeding channel 14 to be unblocked, and the other one of the first movable block 16 and the second movable block 17 is to block the feeding channel 14. In this way, the steam cannot enter the feeding channel 14, which in turn prevents the steam from affecting the detergent tab in the feeding channel 14, to facilitate the operation of the dispensing device 10.

It should be understand that, in other embodiments, the first movable block 16 and the second movable block 17 may move first in a same direction, and then move in the opposite direction, and vice versa, and the specific movement directions of the first movable block 16 and the second movable block 17 may be designed as desired, which is not limited herein, as long as one of the first movable block 16 and the second movable block 17 allows the feeding channel 14 to be unblocked, and the other one of the first movable block 16 and the second movable block 17 is to block the feeding channel 14.

Referring to FIG. 20, the dispensing device 10 includes a first push rod 183 connected tc the first movable block 16, and a first position detector 24 disposed on a side of the first push rod 183. The first push rod 183 is connected to the drive assembly 18. When the first push rod 183 is positioned in a first position, the first movable block 16 allows the feeding channel 14 to be unblocked. The control method includes actions at blocks S50 to S70.

At block S50, the drive assembly 18 is controlled to operate to drive the first push rod 183 to move in a direction approaching the first position detector 24.

At block S60, it is determined, based on a signal from the first position detector 24, whether the first push rod is 183 in contact with the first position detector 24.

At block S70, in response to a determination that the first push rod 183 is in contact with the first position detector 24, the drive assembly 18 is controlled to stop operating.

With this arrangement, it is possible to efficiently and accurately determine a specific position of the current first push rod 183, which can improve detection accuracy. Moreover, after the operation of the drive assembly 18 is stopped, the feeding channel 14 is kept in the unblocked state, which is beneficial for the falling of the detergent tabs.

The first position detector 24 may be a contact resistance detector. The contact resistance detector is disposed in the first position. When the first push rod 183 is in contact with the contact resistance detector, a resistance of the contact resistance detector changes. At this time, an output current of the contact resistance detector also changes. In response to the output current of the contact resistance detector changing, it is determined that the first push rod 183 is located in the first position at this time. That is, at this time, the first movable block 16 allows the feeding channel 14 to be unblocked. When the first push rod 183 is not in the first position, at this time, the first push rod 183 is not in contact with the contact resistance detector. In this case, the resistance of the contact resistance detector does not change. That is, the output current of the contact resistance detector does not change. In this way, it is determined that the first push rod 183 is not located in the first position at this time, and the feeding channel 14 is blocked by the first movable block 16.

It should be understood that in other embodiments, the first position detector 24 may also be of other types, and the specific type of the first position detector 24 may be designed as desired. For example, in other embodiments, the first position detector 24 may also be a range sensor 20. The range sensor 20 is configured to detect a distance between the range sensor 20 and the first push rod 183. A specific position of the first push rod 183 is determined by a specific value of the distance between the range sensor 20 and the first push rod 183. For example, the specific value of the distance between the range sensor 20 and the first push rod 183 may be 0.1c fourth position, 0.2c fourth position, 0.3c fourth position, or the like. The specific value of the distance between the range sensor 20 and the first push rod 183 may be set as desired, which is not limited herein. For example, the specific value of the distance between the range sensor 20 and the first push rod 183 may be adjusted based on a position of the range sensor 20.

Further, the control method further includes: determining, in response to the determination that the first push rod 183 is not in contact with the first position detector 24, that the first push rod 183 is not located in the first position.

In such a case, the first push rod 183 may be located at any position between the first position and the second position, which is not limited herein.

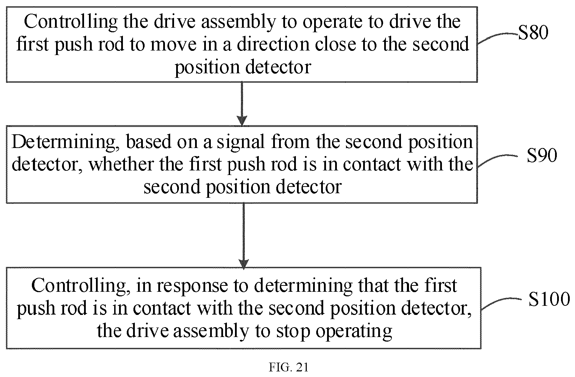

Referring to FIG. 21, in some embodiments, the dispensing device 10 includes the first push rod 183 connected to the first movable block 16, and a second position detector 25 disposed on a side of the first push rod 183. The first push rod 183 is connected to the drive assembly 18. When the first push rod 183 is located in a second position, the feeding channel 14 is blocked by the first movable block 16. The control method includes actions at blocks S80 to S100.

At block S80, the drive assembly 18 is controlled to operate to drive the first push rod 183 to move in a direction approaching the second position detector 25.

At block S90, it is determined, based on a signal from the second position detector 25, whether the first push rod 183 is in contact with the second position detector 25.

At block S100, in response to a determination that the first push rod 183 is in contact with the second position detector 25, the drive assembly 18 is controlled to stop operating.

In the embodiment, an operation principle of the second position detector 25 is same as that of the first position detector 24, and thus the description of the second position detector 25 may refer to that of the first position detector 24, which will be omitted herein.

The specific position in which the first push rod 183 is located may be clearly obtained through the first position detector 24 and the second position detector 25, which facilitates control efficiency of the dispensing device 10 and further improves operation efficiency of the dispensing device 10.

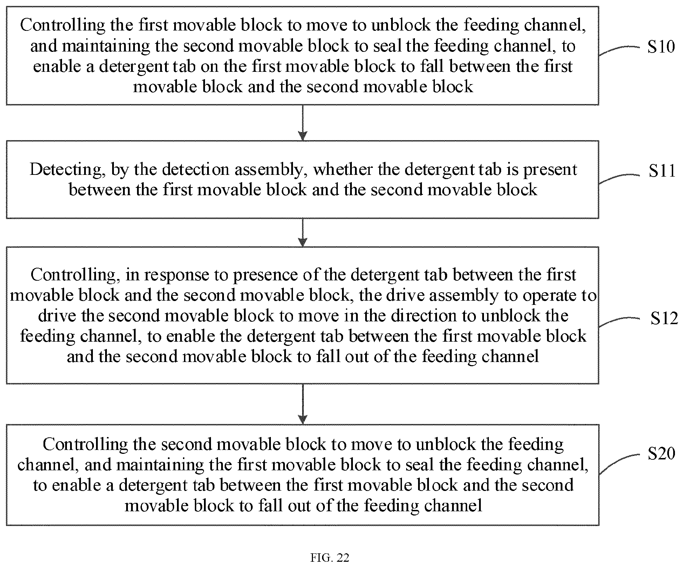

Referring to FIG. 22, in some embodiments, the dispensing device 10 includes a detection assembly 26 located between the first movable block 16 and the second movable block 17. The control method further includes, prior to controlling the second movable block 17 to move to allow the feeding channel 14 to be unblocked, actions at blocks S12 and S12.

At block S11, it is detected by the detection assembly 26 whether the detergent tab is present between the first movable block 16 and the second movable block 17.

At block S12, in response to presence of the detergent tab between the first movable block 16 and the second movable block 17, the drive assembly 18 is controlled to operate to drive the second movable block 17 to move in the direction to unblock the feeding channel 14, to enable the detergent tab between the first movable block 16 and the second movable block 17 to fall out of the feeding channel 14.

With the arrangement of the detection assembly 26, in response to detecting, by the detection assembly 26, the presence of the detergent tab between the first movable block 16 and the second movable block 17, the drive assembly 18 can operate to drive the second movable block 17 to move in the direction to unblock the feeding channel 14, to enable the detergent tab between the first movable block 16 and the second movable block 17 to fall out of the feeding channel 14. When it is detected absence of the detergent tab between the first movable block 16 and the second movable block 17, the drive assembly 18 does not operate. In this way, it is possible to avoid improper operation of the drive assembly 18, which is beneficial for the normal operation of the dispensing device 10.

In one example, the detection assembly 26 may be a photoelectric reflection sensor. The photoelectric reflection sensor includes an emitter and a receiver. The emitter and the receiver are arranged at a same side of the feeding channel 14, respectively. The emitter is configured to emit a light. The light may be reflected by the detergent tab and then received by the receiver. The receiver is configured to determine, based on a light receiving time, whether the feeding channel 14 has the detergent tab stored therein. When the feeding channel 14 has the detergent tab stored therein, the light emitted from the emitter may be reflected by a surface of the detergent tab, and then the reflected light may be received by the receiver. When the feeding channel 14 has no detergent tab stored therein, the light emitted from the emitter may be reflected by a surface of the feeding channel 14, and then the reflected light may be received by the receiver. Since the detergent tab may occupy a space of the feeding channel 14, when the feeding channel 14 has the detergent tab stored therein, a time in which the light is received by the receiver is relatively short. When he feeding channel 14 has no detergent tab stored therein, the time in which the light is received by the receiver is relatively long. It may be determined, by calculating the time in which the light is received by the receiver, whether the feeding channel 14 has the detergent tab stored therein.

For another example, the detection assembly 26 may be an infrared sensor. The infrared sensor includes an emitter and a receiver. The emitter and the receiver are located at two opposite sides in the feeding channel 14. The emitter is configured to emit an infrared light to the receiver, and the infrared light emitted from the emitter is received by the receiver. When he feeding channel 14 has the detergent tab stored therein, in this case, the infrared light emitted from the emitter can be always received by receiver. In addition, when the feeding channel 14 has the detergent tab stored therein, in this case, the infrared light may be blocked by the detergent tab to cause the receiver not to receive the infrared light emitted from the emitter. That is, it may be determined, by determining whether the infrared light emitted from the emitter can be received by the receiver, whether the feeding channel 14 has the detergent tab stored therein.

The above merely exemplifies an operation manner of the two detection assemblies 26. In other embodiments, the detection assembly 26 not only includes the two detection assemblies as described above, and the specific type of the detection assembly 26 may be set as desired. For example, in other embodiments, the detection assembly 26 may also be a light proximity sensor, an optocoupler sensor, or the like. The specific type of the detection assembly 26 is not limited herein.

In some embodiments, the dispensing device 10 includes a pushing portion 12, and a storage tube 11 having a storage channel 111. The storage channel 111 is configured to store the detergent tabs therein. The control method further includes, prior to controlling the first movable block 16 to move: controlling the pushing portion 12 to move to enable the detergent tabs in the storage channel 111 to fall into the feeding channel 14.

With this arrangement, it is possible to enable the detergent tabs in the storage channel 111 to fall into the feeding channel 14 by controlling the movement of the pushing portion 12, which has the simple structure and is easy to be implemented.

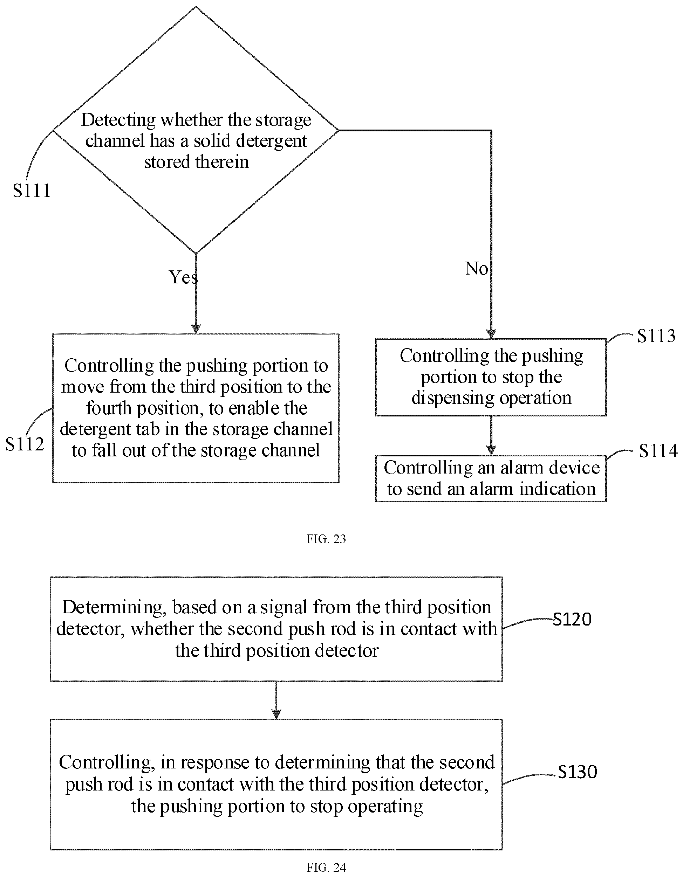

Referring to FIG. 23, in some embodiments, the pushing portion 12 is located between the feeding channel 14 and the storage channel 111, and is moveable between a third position and a fourth position. The operation of controlling the pushing portion 12 to move to enable the detergent tabs in the storage channel 111 to fall into the feeding channel 14 includes actions at blocks S111 and S112.

At block S111, it is detected whether the storage channel 111 has the detergent tab stored therein.

At block S112, in response to detecting that the storage channel 111has the detergent tab stored therein, the pushing portion 12 is controlled to move from the third position to the fourth position, to enable the detergent tab in the storage channel 111 to fall out of the storage channel 111.

The storage channel 111 is configured to store the detergent tab therein. In response to detecting that the storage channel 111 has the detergent tab stored therein, the dispensing device 10 may automatically perform dispensing operation. That is, the user may store the detergent tabs into the storage channel 111, which can reduce the number of times the detergent tabs are added into the dispensing device 10 by the user, and convenience can be provided for the user. Thus, it is possible for the user to conveniently use the dispensing device 10, and user experience is improved.

Further, the dispensing device 10 further includes an alarm device. The control method further includes, in response to detecting that the storage channel 111 has no detergent tab stored therein, actions at blocks S113 and S113.

At S113, the pushing portion 12 is controlled to stop the dispensing operation.

At block S114, the alarm device is controlled to send an alarm indication.

In response to detecting that the storage channel 111 has no detergent tab stored therein, the pushing portion 12 is controlled to stop the dispensing operation, and the alarm indication is sent by the alarm device to inform the user that there is no detergent tab stored in the storage channel 111. In this way, the detergent tabs may be added into the storage channel 111 by the user after the alarm indication is received, to enable the dispensing device 10 to operate normally.

Here, the alarm indication may be a voice indication, a lighting indication, or a combination thereof. When the alarm indication is the voice indication, the alarm device may be a voice player. In response to detecting that the storage channel 111 has no detergent tab stored therein, the voice player is controlled to operate to send the voice indication to inform the user that there is no detergent tab stored in the storage channel 111. When the alarm indication is the lighting indication, the alarm device may be an alarm light. In response to detecting that the storage channel 111 has no detergent tab stored therein, the alarm light is controlled to operate to send the light indication to inform the user that there is no detergent tab stored in the storage channel 111.

Of course, the alarm device may also be other devices, and the specific type of the alarm device may be selected as desired, which is not limited herein, as long as the alarm device can inform the user whether the storage tube 11 has the detergent tab stored therein.

It should be understood that it is detected, by the above sensor 20, whether the storage channel 111 has the detergent tab stored therein. A function of the sensor 20 is the same as that of the detection assembly 26. Description of an operating principle of the sensor 20 may refer to that of the detection assembly 26, which will be omitted herein. That is, one sensor 20 as described above is disposed in the storage channel 111 to perform a detection operation on the storage channel 111. Of course, in other embodiments, other methods may be used to detect whether the storage channel 111 has the detergent tab stored therein, and may be selected as desired, which is not limited herein.

Referring to FIG. 24, in some embodiments, the dispensing device 10 includes a second push rod 133 connected to the pushing portion 12, and a third position detector 21 disposed on a side of the second push rod 133. The control method includes actions at blocks S120 and S130.

At block S120, it is determined, based on a signal from the third position detector 21, whether the second push rod 133 is in contact with the third position detector 21.

At block S130, in response to a determination that the second push rod 133 is in contact with the third position detector 21, the pushing portion 12 is controlled to stop operating.

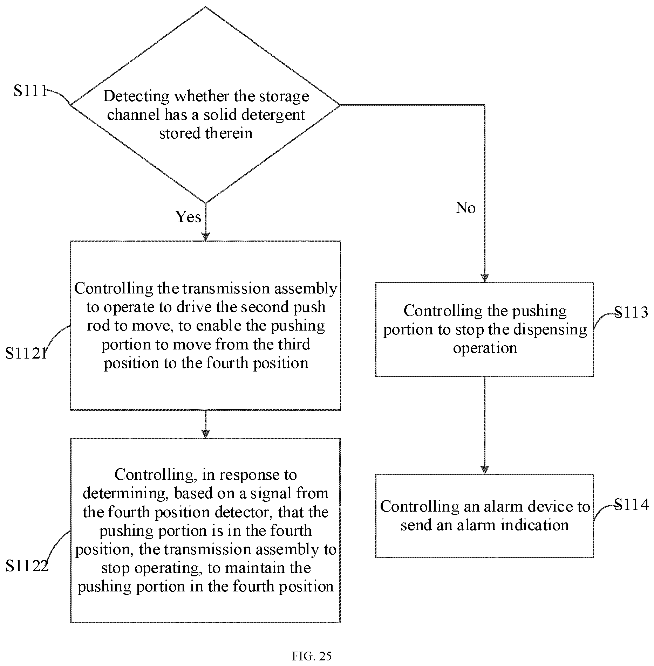

Referring to FIG. 25, in some embodiments, the dispensing device 10 includes a transmission assembly 13 connected to a second push rod 133, and a fourth position detector 22 disposed on a side of the second push rod 133. The operation at block S112 includes actions at blocks S1121 and S1122.

At block S1121, the transmission assembly 13 is controlled to operate to drive the second push rod 133 to move, to allow the pushing portion 12 to move from the third position to the fourth position.

At block S1122, in response to determining, based on a signal from the fourth position detector 22, that the pushing portion 12 is in the fourth position, the transmission assembly 13 is controlled to stop operating, to maintain the pushing portion 12 in the fourth position.

With arrangements of the third position detector 21 and the fourth position detector 22, the position where the current pushing portion 12 is located can be efficiently and accurately determined. Thus, the detection accuracy can be improved, and it is beneficial for the normal operation of the dispensing device 10. Moreover, the operation of the pushing portion 12 is stopped, which facilitates the falling of the detergent tabs of the dispensing device 10. Thus, it is convenient and quick, and the user experience is thus improved.

Here, an operation principle of the third position detector 21 and the fourth position detector 22 is same as that of the first position detector 24, and the specific description of the third position detector 21 and the fourth position detector 22 may refer to that of the first position detector 24, which will be omitted herein.

The dispensing device 10 according to the embodiments of the present disclosure includes a controller, a feeding tube 23, a first movable block 16, and a second movable block 17. The first movable block 16 and the second movable block 17 are arranged in the feeding tube 23 and spaced apart from each other. The feeding tube 23 is formed with a feeding channel 14. The first movable block 16 and the second movable block 17 are configured to unblock or block the feeding channel 14. The controller is configured to: control the first movable block 16 to move to unblock the feeding channel 14, and keep the second movable block 17 blocking the feeding channel 14, to enable a detergent tab on the first movable block 16 to fall between the first movable block 16 and the second movable block 17; and control the second movable block 17 to move to unblock the feeding channel 14, and keep the first movable block 16 blocking the feeding channel 14, to enable a detergent tab between the first movable block 16 and the second movable block 17 to fall out of the feeding channel 14.

For the dispensing device 10 of the embodiments of the present disclosure, when the first movable block 16 allows the feeding channel 14 to be unblocked, the second movable block 17 is kept in the state to block the feeding channel 14. When the feeding channel 14 is blocked by the first movable block 16, the second movable block 17 is kept in the state to unblock the feeding channel 14. That is, one of the first movable block 16 and the second movable block 17 allows the feeding channel 14 to be unblocked, and the other one of the first movable block 16 and the second movable block 17 is to block the feeding channel 14. In this way, the steam cannot enter the feeding channel 14, which in turn prevents the steam from affecting the detergent tabs in the feeding channel 14, to facilitate the operation of the dispensing device 10.

In some embodiments, the dispensing device 10 includes a drive assembly 18. The drive assembly 18 is connected to the first movable block 16 and the second movable block 17. The drive assembly 18 is configured to drive the first movable block 16 and the second movable block 17 to move. The controller is configured to: control the drive assembly 18 to operate to drive the first movable block 16 to move in a direction to unblock the feeding channel 14 and to drive the second movable block 17 to move to keep the second movable block 17 blocking the feeding channel 14; and control the drive assembly 18 to operate to drive the first movable block 16 to move in a direction to block the feeding channel 14 and to drive the second movable block 17 to move to allow the second movable block 17 to keep the feeding channel 14 being blocked.

With this arrangement, it is possible to realize the movements of the first movable block 16 and the second movable block 17 through one drive assembly 18. In this case, it is not necessary to provide more than one drive assemblies 18 to control the first movable block 16 and the second movable block 17, respectively. Therefore, the number of the drive assemblies 18 can be reduced, and a structure of the dispensing device 10 is simplified. Thus, cost of the dispensing device 10 is reduced, which facilitates the mass production of the dispensing device 10.

In some embodiments, the dispensing device 10 includes a first push rod 183 connected to the first movable block 16, and a first position detector 24 disposed on a side of the first push rod 183. The first push rod 183 is connected to the drive assembly 18. When the first push rod 183 is located in a first position, the feeding channel 14 is blocked by the first movable block 16. The controller is configured to: control the drive assembly 18 to operate to drive the first push rod 183 to move in a direction approaching the first position detector 24; determine, based on a signal from the first position detector 24, whether the first push rod 183 is in contact with the first position detector 24; and control, in response to the determination that the first push rod 183 is in contact with the first position detector 24, the drive assembly 18 to stop operating.

With this arrangement, it is possible to efficiently and accurately determine a current specific position of the first push rod 183 and improve the detection accuracy. Moreover, after the operation of the drive assembly 18 is stopped, the drive assembly 18 can be kept in the state in which the feeding channel 14 is unblocked, which is beneficial for the falling of the detergent tabs.

In some embodiments, the dispensing device 10 includes the first push rod 183 connected to the first movable block 16, and a second position detector 25 disposed on a side of the first push rod 183. The first push rod 183 is connected to the drive assembly 18. When the first push rod 183 is located in a second position, the feeding channel 14 is blocked by the first movable block 16. The controller is configured to: control the drive assembly 18 to operate to drive the first push rod 183 to move in a direction approaching the second position detector 25; determine, based on a signal from the second position detector 25, whether the first push rod 183 is in contact with the second position detector 25; and control, in response to the determination that the first push rod 183 is in contact with the second position detector 25, the drive assembly 18 to stop operating.

With this arrangement, it is possible to efficiently and accurately determine the current specific position of the first push rod 183 and improve the detection accuracy. Moreover, after the operation of the drive assembly 18 is stopped, the drive assembly 18 can be kept in the state in which the feeding channel 14 is unblocked, which is beneficial for the falling of the detergent tabs.

In some embodiments, the dispensing device 10 includes a detection assembly 26. The detection assembly 26 is located between the first movable block 16 and the second movable block 17. The controller is configured to: detect, by the detection assembly 26, whether the detergent tab is present between the first movable block 16 and the second movable block 17; and control, in response to the presence of the detergent tab between the first movable block 16 and the second movable block 17, the drive assembly 18 to operate to drive the second movable block 17 to move in the direction to unblock the feeding channel 14, to enable the detergent tab between the first movable block 16 and the second movable block 17 to fall out of the feeding channel 14.

With the arrangement of the detection assembly 26, only when it is detected, by the detection assembly 26, that the detergent tab is present between the first movable block 16 and the second movable block 17, the drive assembly 18 operates to drive the second movable block 17 to move in the direction to unblock the feeding channel 14, to enable the detergent tab between the first movable block 16 and the second movable block 17 to fall out of the feeding channel 14. When it is detected that no detergent tab is present between the first movable block 16 and the second movable block 17, the drive assembly 18 does not operate. In this way, it is possible to avoid improper operation of the drive assembly 18, which is beneficial for the normal operation of the dispensing device 10.

In some embodiments, the dispensing device 10 includes a pushing portion 12, and a storage tube 11 having a storage channel 111. The storage channel 111 is configured to store the detergent tab therein. The controller is configured to control the pushing portion 12 to move to enable the detergent tab in the storage channel 111 to fall into the feeding channel 14.

With this arrangement, it is possible to enable the detergent tab in the storage channel 111 to fall into the feeding channel 14 by controlling the movement of the pushing portion 12, which has simple structure and is easy to be implemented.

In some embodiments, the pushing portion 12 is located between the feeding channel 14 and the storage channel 111, and is moveable between a third position and a fourth position. The controller is configured to: detect whether the storage channel 111 has the detergent tab stored therein; and control, in response to detecting that the storage channel 111 has the detergent tab stored therein, the pushing portion 12 to move from the third position to the fourth position, to enable the detergent tab in the storage channel 111 to fall out of the storage channel 111.

The storage channel 111 is configured to store the detergent tab. In response to detecting that the storage channel 111 has the detergent tab stored therein, the dispensing device 10 can automatically perform the dispensing operation. That is, the user may store the detergent tab into the storage channel 111, which can reduce the number of times the detergent tabs are added into the dispensing device 10 by the user, and convenience can be provided for the user. Thus, it is possible for the user to conveniently use the dispensing device 10, and user experience is improved.

In some embodiments, the dispensing device 10 includes a second push rod 133 connected to the pushing portion 12, and a third position detector 21 disposed on a side of the second push rod 133. The controller is configured to: determine, based on a signal from the third position detector 21, whether the second push rod 133 is in contact with the third position detector 21; and control, in response to the determination that the second push rod 133 is in contact with the third position detector 21, the pushing portion 12 to stop operating.

With this arrangement, it is possible to efficiently and accurately determine the current position where the current pushing portion 12 is located and improve the detection accuracy, which is beneficial for the normal operation of the dispensing device 10. Moreover, the operation of the pushing portion 12 is stopped, which facilitates the falling of the detergent tab of the dispensing device 10. Thus, it is convenient and quick, and the user experience is thus improved.

In some embodiments, the dispensing device 10 includes a transmission assembly 13 connected to the second push rod 133, and a fourth position detector 22 disposed on a side of the second push rod 133. The controller is configured to: control the transmission assembly 13 to operate to drive the second push rod 133 to move, to allow the pushing portion 12 to move from the third position to the fourth position; and control, in response to a determination that the pushing portion 12 is in the fourth position based on a signal of the fourth position detector 22, the transmission assembly 13 to stop operating, to allow the pushing portion 12 to be positioned in the fourth position.

With this arrangement, it is possible to efficiently and accurately determine the current position where the current pushing portion 12 is located and improve the detection accuracy, which is beneficial for the normal operation of the dispensing device 10.

A non-volatile computer-readable storage medium according to embodiments of the present disclosure includes computer-executable instructions. The computer-executable instructions, when executed by one or more processors, cause the processor to perform the control method according to any one of the above embodiments.

For the storage medium of the embodiments of the present disclosure, the storage tube 11 is configured to store the plurality of detergent tabs therein, then the number of the detergent tabs in the storage tube 11 is obtained, and the number of the obtained detergent tabs is notified. In this way, the user may clearly know the number of the detergent tabs in the storage tube 11. When the detergent tabs are insufficient, the detergent tabs are added into the storage tube 11 to avoid the insufficiency of the detergent tabs to be dispensed, which is beneficial for the user to use the household appliance 1000.

In the description of this specification, descriptions with reference to the terms "an embodiment," "some embodiments," "schematic embodiments," "examples," "specific examples," or "some examples", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Those of ordinary skill in the art should understand that all or parts of the steps in the above exemplifying method of the present disclosure may be executed by commanding the related hardware with programs. The programs may be stored in a computer-readable storage medium, and the programs, when executed, include one or a combination of the steps in the method embodiments of the present disclosure.

In addition, each function cell of the embodiments of the present disclosure may be integrated in one processing module, or these units may be separate physical existence, or two or more units are integrated in one processing module. The integrated module may be implemented in a form of hardware or software function module. When implemented in the form of software function module and is sold or used as a standalone product, the integrated module may be stored in the computer-readable storage medium.

## Claims

1. A control method, applied in a dispensing device (10) comprising a feeding tube (23), a first movable block (16), and a second movable block (17), the feeding tube (23) having a feeding channel (14), the first movable block (16) and the second movable block (17) being disposed in the feeding tube (23) and spaced apart from each other, and the first movable block (16) and the second movable block (17) being configured to unblock or block the feeding channel (14), the control method comprising: controlling the first movable block (16) to move to unblock the feeding channel (14), and keeping the second movable block (17) blocking the feeding channel (14), to enable a detergent tab on the first movable block (16) to fall between the first movable block (16) and the second movable block (17); and controlling the second movable block (17) to move to unblock the feeding channel (14), and keeping the first movable block (16) blocking the feeding channel (14), to enable the detergent tab between the first movable block (16) and the second movable block (17) to fall out of the feeding channel (14);
wherein: the dispensing device (10) further comprises a drive assembly (18) connected to the first movable block (16) and the second movable block (17), the drive assembly (18) being configured to drive the first movable block (16) and the second movable block (17) to move; and the control method comprises: by controlling the drive assembly (18) to operate, driving the first movable block (16) to move in a direction to unblock the feeding channel (14), and driving the second movable block (17) to move to block the feeding channel (14); and by controlling the drive assembly (18) to operate, driving the first movable block (16) to move in a direction to block the feeding channel (14), and driving the second movable block (17) to move to keep the feeding channel (14) being unblocked;
**characterised in that** the dispensing device (10) further comprises a first push rod (183) connected to the first movable block (16), and a first position detector (24) disposed on a side of the first push rod (183), the first push rod (183) being connected to the drive assembly (18); and when the first push rod (183) is located in a first position, the first movable block (16) allows the feeding channel (14) to be unblocked, and the control method comprises: controlling the drive assembly (18) to operate to drive the first push rod (183) to move in a direction approaching the first position detector (24); determining, based on a signal from the first position detector (24), whether the first push rod (183) is in contact with the first position detector (24); and controlling, in response to a determination that the first push rod (183) is in contact with the first position detector (24), the drive assembly (18) to stop operating.

2. The control method according to claim 1, wherein a movement direction of the first movable block (16) is opposite to a movement direction of the second movable block (17).

3. The control method according to claim 1, wherein: the dispensing device (10) further comprises a second position detector (25) disposed on a side of the first push rod (183), the first push rod (183) being connected to the drive assembly (18); when the first push rod (183) is located in a second position, the feeding channel (14) is blocked by the first movable block (16), and the control method comprises: controlling the drive assembly (18) to operate to drive the first push rod (183) to move in a direction approaching the second position detector (25); determining, based on a signal from the second position detector (25), whether the first push rod (183) is in contact with the second position detector (25); and controlling, in response to a determination that the first push rod (183) is in contact with the second position detector (25), the drive assembly (18) to stop operating.

4. The control method according to claim 1, wherein: the dispensing device (10) further comprises a detection assembly (26) located between the first movable block (16) and the second movable block (17); and the control method further comprises, prior to controlling the second movable block (17) to move to unblock the feeding channel (14): detecting, by the detection assembly (26), whether the detergent tab is present between the first movable block (16) and the second movable block (17); and controlling, in response to presence of the detergent tab between the first movable block (16) and the second movable block (17), the drive assembly (18) to operate to drive the second movable block (17) to move in the direction to unblock the feeding channel (14), to enable the detergent tab between the first movable block (16) and the second movable block (17) to fall out of the feeding channel (14).

5. The control method according to claim 1, wherein: the dispensing device (10) further comprises a pushing portion (12), and a storage tube (11) having a storage channel (111), the storage channel (111) being configured to store a detergent tab; and the control method further comprises, prior to controlling the first movable block (16) to move: controlling the pushing portion (12) to move to enable the detergent tab in the storage channel (111) to fall into the feeding channel (14).

6. The control method according to claim 5, wherein: the pushing portion (12) is located between the feeding channel (14) and the storage channel (111), and is movable between a third position and a fourth position, and said controlling the pushing portion (12) to move to enable the detergent tab in the storage channel (111) to fall into the feeding channel (14) comprises: detecting whether the storage channel (111) has the detergent tab stored therein; and controlling, in response to detecting that the storage channel (111) has the detergent tab stored therein, the pushing portion (12) to move from the third position to the fourth position, to enable the detergent tab in the storage channel (111) to fall out of the storage channel (111).

7. The control method according to claim 6, wherein: the dispensing device (10) further comprises a second push rod (133) connected to the pushing portion (12), and a third position detector (21) disposed on one side of the second push rod (133); and the control method comprises: determining, based on a signal from the third position detector (21), whether the second push rod (133) is in contact with the third position detector (21); and controlling, in response to a determination that the second push rod (133) is in contact with the third position detector (21), the pushing portion (12) to stop moving, preferably wherein: the dispensing device (10) further comprises a transmission assembly (13) connected to the second push rod (133), and a fourth position detector (22) disposed on one side of the second push rod (133), and said controlling the pushing portion (12) to move from the third position to the fourth position comprises: controlling the transmission assembly (13) to operate to drive the second push rod (133) to move, to enable the pushing portion (12) to move from the third position to the fourth position; and controlling, in response to determining based on a signal from the fourth position detector (22) that the pushing portion (12) is in the fourth position, the transmission assembly (13) to stop operating, to maintain the pushing portion (12) in the fourth position.

8. A dispensing device (10), comprising: a feeding tube (23) having a feeding channel (14); a first movable block (16) and a second movable block (17) that disposed in the feeding tube (23) and spaced apart from each other, the first movable block (16) and the second movable block (17) being configured to unblock or block the feeding channel (14); and a controller configured to: control the first movable block (16) to move to unblock the feeding channel (14), and keeping the second movable block (17) blocking the feeding channel (14), to enable a detergent tab on the first movable block (16) to fall between the first movable block (16) and the second movable block (17); and control the second movable block (17) to move to unblock the feeding channel (14), and keeping the first movable block (16) blocking the feeding channel (14), to enable the detergent tab between the first movable block (16) and the second movable block (17) to fall out of the feeding channel (14);
further comprising a drive assembly (18) connected to the first movable block (16) and the second movable block (17), the drive assembly (18) being configured to drive the first movable block (16) and the second movable block (17) to move, wherein the controller is further configured to: by controlling the drive assembly (18) to operate, drive the first movable block (16) to move in a direction to unblock the feeding channel (14), and drive the second movable block (17) to move to block the feeding channel (14); and by controlling the drive assembly (18) to operate, drive the first movable block (16) to move in a direction to block the feeding channel (14), and drive the second movable block (17) to move to keep the feeding channel (14) being unblocked,
**characterised by** further comprising a first push rod (183) connected to the first movable block (16), and a first position detector (24) disposed on a side of the first push rod (183), the first push rod (183) being connected to the drive assembly (18), wherein: when the first push rod (183) is located in a first position, the first movable block (16) allows the feeding channel (14) to be unblocked, and the controller is further configured to: control the drive assembly (18) to operate to drive the first push rod (183) to move in a direction approaching the first position detector (24); determine, based on a signal from the first position detector (24), whether the first push rod (183) is in contact with the first position detector (24); and control, in response to a determination that the first push rod (183) being in contact with the first position detector (24), the drive assembly (18) to stop operating.

9. The dispensing device according to claim 8, further comprising the first push rod (183) connected to the first movable block (16), and a second position detector (25) disposed on a side of the first push rod (183), the first push rod (183) being connected to the drive assembly (18), wherein: when the first push rod (183) is located in a second position, the feeding channel (14) is blocked by the first movable block (16), and the controller is further configured to: control the drive assembly (18) to operate to drive the first push rod (183) to move in a direction approaching the second position detector (25); determine, based on a signal from the second position detector (25), whether the first push rod (183) is in contact with the second position detector (25); and control, in response to a determination that the first push rod (183) is in contact with the second position detector (25), the drive assembly (18) to stop operating.

10. The dispensing device (10) according to claim 8, further comprising a detection assembly (26) located between the first movable block (16) and the second movable block (17), wherein the controller is further configured to: detect, by the detection assembly (26), whether the detergent tab is present between the first movable block (16) and the second movable block (17); and control, in response to presence of the detergent tab between the first movable block (16) and the second movable block (17), the drive assembly (18) to operate to drive the second movable block (17) to move in the direction to unblock the feeding channel (14), to enable the detergent tab between the first movable block (16) and the second movable block (17) to fall out of the feeding channel (14).

11. The dispensing device (10) according to claim 8, further comprising a pushing portion (12), and a storage tube (11) having a storage channel (111), the storage channel (111) being configured to store a detergent tab, wherein the controller is further configured to control the pushing portion (12) to move to enable the detergent tab in the storage channel (111) to fall into the feeding channel (14).

12. The dispensing device (10) according to claim 11, wherein: the pushing portion (12) is located between the feeding channel (14) and the storage channel (111), and is moveable between a third position and a fourth position, and the controller is further configured to: detect whether the storage channel (111) has the detergent tab stored therein; and control, in response to detecting that the storage channel (111) has the detergent tab stored therein, the pushing portion (12) to move from the third position to the fourth position, to enable the detergent tab in the storage channel (111) to fall out of the storage channel (111).

13. The dispensing device (10) according to claim 12, further comprising a second push rod (133) connected to the pushing portion (12), and a third position detector (21) disposed on one side of the second push rod (133), wherein the controller is further configured to: determine, based on a signal from the third position detector (21), whether the second push rod (133) is in contact with the third position detector (21); and control, in response to a determination that the second push rod (133) is in contact with the third position detector (21), the pushing portion (12) to stop operating, preferably further comprising a transmission assembly (13) connected to the second push rod (133), and a fourth position detector (22) disposed on one side of the second push rod (133), wherein the controller is further configured to: control the transmission assembly (13) to operate to drive the second push rod (133) to move, to enable the pushing portion (12) to move from the third position to the fourth position; and control, in response to determining, based on a signal from the fourth position detector (22), that the pushing portion (12) is in the fourth position, the transmission assembly (13) to stop operating, to maintain the pushing portion (12) in the fourth position.

14. A household appliance (1000), comprising: a cavity (1001); and a door body assembly (100) comprising: a door body (101); and the dispensing device (10) according to any one of claims 7 to 12, wherein the dispensing device (10) is disposed on the door body (101), wherein: the cavity (1001) has an accommodation space (1002); the door body assembly (100) is rotatably connected to the cavity (1001); the accommodation space (1002) is openable or closable by the door body assembly (100) with a rotation of the door body assembly (100); and the dispensing device (10) is located within the accommodation space (1002) when the accommodating space is closed by the door body assembly (100).

## Patentansprüche

1. Steuerverfahren, das in einer Ausgabevorrichtung (10) angewandt wird, die eine Zuführröhre (23), einen ersten bewegbaren Block (16) und einen zweiten bewegbaren Block (17) umfasst, wobei die Zuführröhre (23) einen Zuführkanal (14) aufweist, der erste bewegbare Block (16) und der zweite bewegbare Block (17) in der Zuführröhre (23) angeordnet und voneinander beabstandet sind und wobei der erste bewegbare Block (16) und der zweite bewegbare Block (17) dazu konfiguriert sind, den Zuführkanal (14) freizugeben oder zu versperren, wobei das Steuerverfahren Folgendes umfasst: Steuern des ersten bewegbaren Blocks (16) zur Bewegung, um den Zuführkanal (14) freizugeben, und Halten des zweiten bewegbaren Blocks (17), sodass er den Zuführkanal (14) versperrt, um zu ermöglichen, dass ein Spülmittel-Tab auf dem ersten bewegbaren Block (16) zwischen den ersten bewegbaren Block (16) und den zweiten bewegbaren Block (17) fällt; und Steuern des zweiten bewegbaren Blocks (17) zur Bewegung, um den Zuführkanal (14) freizugeben, und Halten des ersten bewegbaren Blocks (16), sodass er den Zuführkanal (14) versperrt, um zu ermöglichen, dass der Spülmittel-Tab zwischen dem ersten bewegbaren Block (16) und dem zweiten bewegbaren Block (17) aus dem Zuführkanal (14) herausfällt;
wobei die Ausgabevorrichtung (10) ferner eine mit dem ersten bewegbaren Block (16) und dem zweiten bewegbaren Block (17) verbundene Antriebsanordnung (18) umfasst, die Antriebsanordnung (18) dazu konfiguriert ist, den ersten bewegbaren Block (16) und den zweiten bewegbare Block (17) zur Bewegung anzutreiben; und das Steuerverfahren Folgendes umfasst: durch Steuern der Antriebsanordnung (18) zum Betrieb, Antreiben des ersten bewegbaren Blocks (16) zur Bewegung in einer Richtung zum Freigeben des Zuführkanals (14) und Antreiben des zweiten bewegbaren Blocks (17) zur Bewegung, um den Zuführkanal (14) zu versperren; und durch Steuern der Antriebsanordnung (18) zum Betrieb, Antreiben des ersten bewegbaren Blocks (16) zur Bewegung in einer Richtung zum Versperren des Zuführkanals (14) und Antreiben des zweiten bewegbaren Blocks (17) zur Bewegung, um den Zuführkanal (14) freigegeben zu halten;
**dadurch gekennzeichnet, dass** die Ausgabevorrichtung (10) ferner einen mit dem ersten bewegbaren Block (16) verbundenen ersten Stößel (183) und einen an einer Seite des ersten Stößels (183) angeordneten ersten Stellungsdetektor (24) umfasst, der erste Stößel (183) mit der Antriebsanordnung (18) verbunden ist; und, wenn sich der erste Stößel (183) in einer ersten Stellung befindet, der erste bewegbare Block (16) zulässt, dass der Zuführkanal (14) freigegeben wird, und das Steuerverfahren Folgendes umfasst: Steuern der Antriebsanordnung (18) zum Betrieb, um den ersten Stößel (183) zur Bewegung in einer sich dem ersten Stellungsdetektor (24) nähernden Richtung anzutreiben; Bestimmen, basierend auf einem Signal von dem ersten Stellungsdetektor (24), ob sich der erste Stößel (183) mit dem ersten Stellungsdetektor (24) in Kontakt befindet; und Steuern, als Reaktion auf eine Bestimmung, dass sich der erste Stößel (183) mit dem ersten Stellungsdetektor (24) in Kontakt befindet, der Antriebsanordnung (18) zum Einstellen des Betriebs.

2. Steuerverfahren nach Anspruch 1, wobei eine Bewegungsrichtung des ersten bewegbaren Blocks (16) einer Bewegungsrichtung des zweiten bewegbaren Blocks (17) entgegengesetzt ist.

3. Steuerverfahren nach Anspruch 1, wobei die Ausgabevorrichtung (10) ferner einen an einer Seite des Stößels (183) angeordneten zweiten Stellungsdetektor (25) umfasst und der erste Stößel (183) mit der Antriebsanordnung (18) verbunden ist; wobei, wenn sich der erste Stößel (183) in einer zweiten Stellung befindet, der Zuführkanal (14) von dem ersten bewegbaren Block (16) versperrt ist, und das Steuerverfahren Folgendes umfasst: Steuern der Antriebsanordnung (18) zum Betrieb, um den ersten Stößel (183) zur Bewegung in einer sich dem zweiten Stellungsdetektor (25) nähernden Richtung anzutreiben; Bestimmen, basierend auf einem Signal von dem zweiten Stellungsdetektor (25), ob sich der erste Stößel (183) mit dem zweiten Stellungsdetektor (25) in Kontakt befindet; und Steuern, als Reaktion auf eine Bestimmung, dass sich der erste Stößel (183) mit dem zweiten Stellungsdetektor (25) in Kontakt befindet, der Antriebsanordnung (18) zum Einstellen des Betriebs.

4. Steuerverfahren nach Anspruch 1, wobei die Ausgabevorrichtung (10) ferner eine Erfassungsanordnung (26) umfasst, die sich zwischen dem ersten bewegbaren Block (16) und dem zweiten bewegbaren Block (17) befindet; und das Steuerverfahren ferner vor dem Steuern des zweiten bewegbaren Blocks (17) zur Bewegung, um den Zuführkanal (14) freizugeben, Folgendes umfasst: Erfassen, durch die Erfassungsanordnung (26), ob der Spülmittel-Tab zwischen dem ersten bewegbaren Block (16) und dem zweiten bewegbaren Block (17) anwesend ist; und Steuern, als Reaktion auf die Anwesenheit des Spülmittel-Tabs zwischen dem ersten bewegbaren Block (16) und dem zweiten bewegbaren Block (17), der Antriebsanordnung (18) zum Betrieb, um den zweiten bewegbaren Block (17) zur Bewegung in der Richtung zum Freigeben des Zuführkanals (14) anzutreiben, um zu ermöglichen, dass der Spülmittel-Tab zwischen dem ersten bewegbaren Block (16) und dem zweiten bewegbaren Block (17) aus dem Zuführkanal (14) herausfällt.

5. Steuerverfahren nach Anspruch 1, wobei die Ausgabevorrichtung (10) ferner einen Schiebeabschnitt (12) und eine Aufbewahrungsröhre (11) mit einem Aufbewahrungskanal (111) umfasst, der Aufbewahrungskanal (111) dazu konfiguriert ist, einen Spülmittel-Tab aufzubewahren; und das Steuerverfahren ferner, vor dem Steuern des ersten bewegbaren Blocks (16) zur Bewegung, Folgendes umfasst: Steuern des Schiebeabschnitts (12) zur Bewegung, um zu ermöglichen, dass der Spülmittel-Tab in dem Aufbewahrungskanal (111) in den Zuführkanal (14) fällt.

6. Steuerverfahren nach Anspruch 5, wobe: sich der Schiebeabschnitt (12) zwischen dem Zuführkanal (14) und dem Aufbewahrungskanal (111) befindet und zwischen einer dritten Stellung und einer vierten Stellung bewegbar ist und das Steuern des Schiebeabschnitts (12) zur Bewegung, um zu ermöglichen, dass der Spülmittel-Tab in dem Aufbewahrungskanal (111) in den Zuführkanal (14) fällt, Folgendes umfasst: Erfassen, ob der Spülmittel-Tab in dem Aufbewahrungskanal (111) aufbewahrt ist; und Steuern, als Reaktion auf das Erfassen, dass der Spülmittel-Tab in dem Aufbewahrungskanal (111) aufbewahrt ist, des Schiebeabschnitts (12) zur Bewegung aus der dritten Stellung in die vierte Stellung, um zu ermöglichen, dass der Spülmittel-Tab in dem Aufbewahrungskanal (111) aus dem Aufbewahrungskanal (111) herausfällt.

7. Steuerverfahren nach Anspruch 6, wobei die Ausgabevorrichtung (10) ferner einen mit dem Schiebeabschnitt (12) verbundenen zweiten Stößel (133) und einen an einer Seite des zweiten Stößels (133) angeordneten dritten Stellungsdetektor (21) umfasst; und das Steuerverfahren Folgendes umfasst: Bestimmen, basierend auf einem Signal von dem dritten Stellungsdetektor (21), ob sich der zweite Stößel (133) mit dem dritten Stellungsdetektor (21) in Kontakt befindet; und Steuern, als Reaktion auf eine Bestimmung, dass sich der zweite Stößel (133) mit dem dritten Stellungsdetektor (21) in Kontakt befindet, des Schiebeabschnitts (12) zum Einstellen der Bewegung, wobei vorzugsweise: die Ausgabevorrichtung (10) ferner eine mit dem zweiten Stößel (133) verbundene Getriebeanordnung (13) und einen an einer Seite des zweiten Stößels (133) angeordneten vierten Stellungsdetektor (22) umfasst; und das Steuern des Schiebeabschnitts (12) zur Bewegung aus der dritten Stellung in die vierte Stellung Folgendes umfasst: Steuern der Getriebeanordnung (13) zum Betrieb, um den zweiten Stößel (133) zur Bewegung anzutreiben, um zu ermöglichen, dass sich der Schiebeabschnitt (12) aus der dritten Stellung in die vierte Stellung bewegt; und Steuern, als Reaktion auf das Bestimmen, basierend auf einem Signal von dem vierten Stellungsdetektor (22), dass sich der Schiebeabschnitt (12) in der vierten Stellung befindet, der Getriebeanordnung (13) zum Einstellen des Betriebs, um den Schiebeabschnitt (12) in der vierten Stellung zu halten.

8. Ausgabevorrichtung (10), die Folgendes umfasst: eine Zuführröhre (23) mit einem Zuführkanal (14); einen ersten bewegbaren Block (16) und einen zweiten bewegbaren Block (17), die in der Zuführröhre (23) angeordnet und voneinander beabstandet sind, wobei der erste bewegbare Block (16) und der zweite bewegbare Block (17) dazu konfiguriert sind, den Zuführkanal (14) freizugeben oder zu versperren; und eine Steuerung, die zu Folgendem konfiguriert ist: Steuern des ersten bewegbaren Blocks (16) zur Bewegung, um den Zuführkanal (14) freizugeben, und Halten des zweiten bewegbaren Blocks (17), sodass er den Zuführkanal (14) versperrt, um zu ermöglichen, dass ein Spülmittel-Tab auf dem ersten bewegbaren Block (16) zwischen den ersten bewegbaren Block (16) und den zweiten bewegbaren Block (17) fällt; und Steuern des zweiten bewegbaren Blocks (17) zur Bewegung, um den Zuführkanal (14) freizugeben, und Halten des ersten bewegbaren Blocks (16), sodass er den Zuführkanal (14) versperrt, um zu ermöglichen, dass der Spülmittel-Tab zwischen dem ersten bewegbaren Block (16) und dem zweiten bewegbaren Block (17) aus dem Zuführkanal (14) herausfällt;
ferner umfassend eine mit dem ersten bewegbaren Block (16) und dem zweiten bewegbaren Block (17) verbundene Antriebsanordnung (18), wobei die Antriebsanordnung (18) dazu konfiguriert ist, den ersten bewegbaren Block (16) und den zweiten bewegbaren Block (17) zur Bewegung anzutreiben; wobei die Steuerung ferner zu Folgendem konfiguriert ist: durch Steuern der Antriebsanordnung (18) zum Betrieb, Antreiben des ersten bewegbaren Blocks (16) zur Bewegung in einer Richtung, um den Zuführkanal (14) freizugeben, und Antreiben des zweiten bewegbaren Blocks (17) zur Bewegung, um den Zuführkanal (14) zu versperren; und durch Steuern der Antriebsanordnung (18) zum Betrieb, Antreiben des ersten bewegbaren Blocks (16) zur Bewegung in einer Richtung, um den Zuführkanal (14) zu versperren, und Antreiben des zweiten bewegbaren Blocks (17) zur Bewegung, um den Zuführkanal (14) freigegeben zu halten;
**dadurch gekennzeichnet, dass** sie ferner einen mit dem ersten bewegbaren Block (16) verbundenen ersten Stößel (183) und einen an einer Seite des ersten Stößels (183) angeordneten ersten Stellungsdetektor umfasst, wobei der erste Stößel (183) mit der Antriebsanordnung (18) verbunden ist, wobei, wenn sich der erste Stößel (183) in einer ersten Stellung befindet, der erste bewegbare Block (16) zulässt, dass der Zuführkanal (14) freigegeben wird, und die Steuerung ferner zu Folgendem konfiguriert ist: Steuern der Antriebsanordnung (18) zum Betrieb, um den ersten Stößel (183) zur Bewegung in einer sich dem ersten Stellungsdetektor (24) nähernden Richtung anzutreiben; Bestimmen, basierend auf einem Signal von dem ersten Stellungsdetektor (24), ob sich der erste Stößel (183) mit dem ersten Stellungsdetektor (24) in Kontakt befindet; und Steuern, als Reaktion auf eine Bestimmung, dass sich der erste Stößel (183) mit dem ersten Stellungsdetektor (24) in Kontakt befindet, der Antriebsanordnung (18) zum Einstellen des Betriebs.

9. Ausgabevorrichtung nach Anspruch 8, ferner umfassend den mit dem ersten bewegbaren Block (16) verbundenen ersten Stößel (183) und einen an einer Seite des ersten Stößels (183) angeordneten zweiten Stellungsdetektor (25), wobei der erste Stößel (183) mit der Antriebsanordnung (18) verbunden ist, wobei, wenn sich der erste Stößel (183) in einer zweiten Stellung befindet, der Zuführkanal (14) von dem ersten bewegbaren Block (16) versperrt ist, und die Steuerung ferner zu Folgendem konfiguriert ist: Steuern der Antriebsanordnung (18) zum Betrieb, um den ersten Stößel (183) zur Bewegung in einer sich dem zweiten Stellungsdetektor (25) nähernden Richtung anzutreiben; Bestimmen, basierend auf einem Signal von dem zweiten Stellungsdetektor (25), ob sich der erste Stößel (183) mit dem zweiten Stellungsdetektor (25) in Kontakt befindet; und Steuern, als Reaktion auf eine Bestimmung, dass sich der erste Stößel (183) mit dem zweiten Stellungsdetektor (25) in Kontakt befindet, der Antriebsanordnung (18) zum Einstellen des Betriebs.

10. Ausgabevorrichtung (10) nach Anspruch 8, ferner umfassend eine Erfassungsanordnung (26), die sich zwischen dem ersten bewegbaren Block (16) und dem zweiten bewegbaren Block (17) befindet, wobei die Steuerung ferner zu Folgendem konfiguriert ist: Erfassen, durch die Erfassungsanordnung (26), ob der Spülmittel-Tab zwischen dem ersten bewegbaren Block (16) und dem zweiten bewegbaren Block (17) anwesend ist; und Steuern, als Reaktion auf die Anwesenheit des Spülmittel-Tabs zwischen dem ersten bewegbaren Block (16) und dem zweiten bewegbaren Block (17), der Antriebsanordnung (18) zum Betrieb, um den zweiten bewegbaren Block (17) zur Bewegung in der Richtung zum Freigeben des Zuführkanals (14) anzutreiben, um zu ermöglichen, dass der Spülmittel-Tab zwischen dem ersten bewegbaren Block (16) und dem zweiten bewegbaren Block (17) aus dem Zuführkanal (14) herausfällt.

11. Ausgabevorrichtung (10) nach Anspruch 8, ferner umfassend einen Schiebeabschnitt (12) und eine Aufbewahrungsröhre (11) mit einem Aufbewahrungskanal (111), wobei der Aufbewahrungskanal (111) dazu konfiguriert ist, einen Spülmittel-Tab aufzubewahren, wobei die Steuerung ferner zum Steuern des Schiebeabschnitts (12) zur Bewegung, um zu ermöglichen, dass der Spülmittel-Tab in dem Aufbewahrungskanal (111) in den Zuführkanal (14) fällt, konfiguriert ist.

12. Ausgabevorrichtung (10) nach Anspruch 11, wobei sich der Schiebeabschnitt (12) zwischen dem Zuführkanal (14) und dem Aufbewahrungskanal (111) befindet und zwischen einer dritten Stellung und einer vierten Stellung bewegbar ist und die Steuerung ferner zu Folgendem konfiguriert ist: Erfassen, ob der Spülmittel-Tab in dem Aufbewahrungskanal (111) aufbewahrt ist; und Steuern, als Reaktion auf das Erfassen, dass der Spülmittel-Tab in dem Aufbewahrungskanal (111) aufbewahrt ist, des Schiebeabschnitts (12) zur Bewegung aus der dritten Stellung in die vierte Stellung, um zu ermöglichen, dass der Spülmittel-Tab in dem Aufbewahrungskanal (111) aus dem Aufbewahrungskanal (111) herausfällt.

13. Ausgabevorrichtung (10) nach Anspruch 12, ferner umfassend einen mit dem Schiebeabschnitt (12) verbundenen zweiten Stößel (133) und einen an einer Seite des zweiten Stößels (133) angeordneten dritten Stellungsdetektor (21); wobei die Steuerung ferner zu Folgendem konfiguriert ist: Bestimmen, basierend auf einem Signal von dem dritten Stellungsdetektor (21), ob sich der zweite Stößel (133) mit dem dritten Stellungsdetektor (21) in Kontakt befindet; und Steuern, als Reaktion auf eine Bestimmung, dass sich der zweite Stößel (133) mit dem dritten Stellungsdetektor (21) in Kontakt befindet, des Schiebeabschnitts (12) zum Einstellen des Betriebs, vorzugsweise ferner umfassend eine mit dem zweiten Stößel (133) verbundene Getriebeanordnung (13) und einen an einer Seite des zweiten Stößels (133) angeordneten vierten Stellungsdetektor (22), wobei die Steuerung ferner zu Folgendem konfiguriert ist: Steuern der Getriebeanordnung (13) zum Betrieb, um den zweiten Stößel (133) zur Bewegung anzutreiben, um zu ermöglichen, dass sich der Schiebeabschnitt (12) aus der dritten Stellung in die vierte Stellung bewegt; und Steuern, als Reaktion auf das Bestimmen, basierend auf einem Signal von dem vierten Stellungsdetektor (22), dass sich der Schiebeabschnitt (12) in der vierten Stellung befindet, der Getriebeanordnung (13) zum Einstellen des Betriebs, um den Schiebeabschnitt (12) in der vierten Stellung zu halten.

14. Haushaltsgerät (1000), das Folgendes umfasst: eine Höhlung (1001); und eine Türkörperanordnung (100), die Folgendes umfasst: einen Türkörper (101); und die Ausgabevorrichtung (10) nach einem der Ansprüche 7 bis 12, wobei die Ausgabevorrichtung (10) an dem Türkörper (101) angeordnet ist, wobei die Höhlung (1001) einen Aufnahmeraum (1002) aufweist; die Türkörperanordnung (100) drehbar mit der Höhlung (1001) verbunden ist; der Aufnahmeraum (1002) durch die Türkörperanordnung (100) mit einer Drehung der Türkörperanordnung (100) geöffnet oder geschlossen werden kann; und sich die Ausgabevorrichtung (10) innerhalb des Aufnahmeraums (1002) befindet, wenn der Aufnahmeraum durch die Türkörperanordnung (100) geschlossen ist.

## Revendications

1. Procédé de commande, appliqué dans un dispositif de distribution (10) comportant un tube d'alimentation (23), un premier bloc mobile (16) et un deuxième bloc mobile (17), le tube d'alimentation (23) ayant un canal d'alimentation (14), le premier bloc mobile (16) et le deuxième bloc mobile (17) étant disposés dans le tube d'alimentation (23) et espacés l'un de l'autre, et le premier bloc mobile (16) et le deuxième bloc mobile (17) étant configurés pour débloquer ou bloquer le canal d'alimentation (14), le procédé de commande comportant les étapes consistant à : commander le premier bloc mobile (16) afin qu'il se déplace pour débloquer le canal d'alimentation (14), et maintenir le deuxième bloc mobile (17) en état de blocage du canal d'alimentation (14), pour permettre à une tablette de détergent sur le premier bloc mobile (16) de tomber entre le premier bloc mobile (16) et le deuxième bloc mobile (17) ; et commander le deuxième bloc mobile (17) afin qu'il se déplace pour débloquer le canal d'alimentation (14), et maintenir le premier bloc mobile (16) en état de blocage du canal d'alimentation (14), pour permettre à la tablette de détergent entre le premier bloc mobile (16) et le deuxième bloc mobile (17) de tomber du canal d'alimentation (14) ;
dans lequel : le dispositif de distribution (10) comporte par ailleurs un ensemble d'entraînement (18) relié au premier bloc mobile (16) et au deuxième bloc mobile (17), l'ensemble d'entraînement (18) étant configuré pour entraîner le premier bloc mobile (16) et le deuxième bloc mobile (17) pour qu'ils se déplacent ; et le procédé de commande comporte les étapes consistant à : par la commande du fonctionnement de l'ensemble d'entraînement (18), entraîner le premier bloc mobile (16) pour qu'il se déplace dans une direction afin de débloquer le canal d'alimentation (14), et entraîner le deuxième bloc mobile (17) pour qu'il se déplace afin de bloquer le canal d'alimentation (14) ; et par la commande du fonctionnement de l'ensemble d'entraînement (18), entraîner le premier bloc mobile (16) pour qu'il se déplace dans une direction afin de bloquer le canal d'alimentation (14), et entraîner le deuxième bloc mobile (17) pour qu'il se déplace afin de maintenir le canal d'alimentation (14) dans un état débloqué ;
**caractérisé en ce que** le dispositif de distribution (10) comporte par ailleurs une première tige de poussée (183) reliée au premier bloc mobile (16), et un premier détecteur de position (24) disposé sur un côté de la première tige de poussée (183), la première tige de poussée (183) étant reliée à l'ensemble d'entraînement (18) ; et quand la première tige de poussée (183) est située dans une première position, le premier bloc mobile (16) permet de débloquer le canal d'alimentation (14), et le procédé de commande comporte les étapes consistant à : commander le fonctionnement de l'ensemble d'entraînement (18) afin qu'il entraîne la première tige de poussée (183) pour qu'elle se déplace dans une direction approchant le premier détecteur de position (24) ; déterminer, sur la base d'un signal provenant du premier détecteur de position (24), si la première tige de poussée (183) est en contact avec le premier détecteur de position (24) ; et commander, en réponse à une détermination comme quoi la première tige de poussée (183) est en contact avec le premier détecteur de position (24), l'ensemble d'entraînement (18) pour qu'il cesse de fonctionner.

2. Procédé de commande selon la revendication 1, dans lequel une direction de déplacement du premier bloc mobile (16) est opposée à une direction de déplacement du deuxième bloc mobile (17).

3. Procédé de commande selon la revendication 1, dans lequel : le dispositif de distribution (10) comporte par ailleurs un deuxième détecteur de position (25) disposé sur un côté de la première tige de poussée (183), la première tige de poussée (183) étant reliée à l'ensemble d'entraînement (18) ; quand la première tige de poussée (183) est située dans une deuxième position, le canal d'alimentation (14) est bloqué par le premier bloc mobile (16), et le procédé de commande comporte les étapes consistant à : commander le fonctionnement de l'ensemble d'entraînement (18) afin qu'il entraîne la première tige de poussée (183) pour qu'elle se déplace dans une direction approchant le deuxième détecteur de position (25) ; déterminer, sur la base d'un signal provenant du deuxième détecteur de position (25), si la première tige de poussée (183) est en contact avec le deuxième détecteur de position (25) ; et en réponse à une détermination comme quoi la première tige de poussée (183) est en contact avec le deuxième détecteur de position (25), commander l'ensemble d'entraînement (18) pour qu'il cesse de fonctionner.

4. Procédé de commande selon la revendication 1, dans lequel : le dispositif de distribution (10) comporte par ailleurs un ensemble de détection (26) situé entre le premier bloc mobile (16) et le deuxième bloc mobile (17) ; et le procédé de commande comporte par ailleurs, avant de commander le deuxième bloc mobile (17) afin qu'il se déplace pour débloquer le canal d'alimentation (14), les étapes consistant à : détecter, par l'ensemble de détection (26), si la tablette de détergent est présente entre le premier bloc mobile (16) et le deuxième bloc mobile (17) ; et en réponse à la présence de la tablette de détergent entre le premier bloc mobile (16) et le deuxième bloc mobile (17), commander le fonctionnement de l'ensemble d'entraînement (18) afin qu'il entraîne le deuxième bloc mobile (17) pour qu'il se déplace dans la direction de déblocage du canal d'alimentation (14), pour permettre à la tablette de détergent entre le premier bloc mobile (16) et le deuxième bloc mobile (17) de tomber du canal d'alimentation (14).

5. Procédé de commande selon la revendication 1, dans lequel : le dispositif de distribution (10) comporte par ailleurs une partie de poussée (12) et un tube de stockage (11) ayant un canal de stockage (111), le canal de stockage (111) étant configuré pour stocker une tablette de détergent ; et le procédé de commande comporte par ailleurs, avant de commander le premier bloc mobile (16) afin qu'il se déplace, l'étape consistant à : commander la partie de poussée (12) afin qu'elle se déplace pour permettre à la tablette de détergent dans le canal de stockage (111) de tomber dans le canal d'alimentation (14).

6. Procédé de commande selon la revendication 5, dans lequel : la partie de poussée (12) est située entre le canal d'alimentation (14) et le canal de stockage (111), et est mobile entre une troisième position et une quatrième position, et ladite étape consistant à commander la partie de poussée (12) afin qu'elle se déplace pour permettre à la tablette de détergent dans le canal de stockage (111) de tomber dans le canal d'alimentation (14) comporte les étapes consistant à : détecter si le canal de stockage (111) contient la tablette de détergent ; et en réponse à la détection comme quoi le canal de stockage (111) contient la tablette de détergent, commander la partie de poussée (12) afin qu'elle se déplace de la troisième position à la quatrième position, pour permettre à la tablette de détergent dans le canal de stockage (111) de tomber du canal de stockage (111).

7. Procédé de commande selon la revendication 6, dans lequel : le dispositif de distribution (10) comporte par ailleurs une deuxième tige de poussée (133) reliée à la partie de poussée (12), et un troisième détecteur de position (21) disposé sur un côté de la deuxième tige de poussée (133) ; et le procédé de commande comporte les étapes consistant à :
déterminer, sur la base d'un signal provenant du troisième détecteur de position (21), si la deuxième tige de poussée (133) est en contact avec le troisième détecteur de position (21) ; et
en réponse à une détermination comme quoi la deuxième tige de poussée (133) est en contact avec le troisième détecteur de position (21), commander la partie de poussée (12) pour qu'elle cesse de se déplacer, de préférence dans lequel : le dispositif de distribution (10) comporte par ailleurs un ensemble de transmission (13) relié à la deuxième tige de poussée (133), et un quatrième détecteur de position (22) disposé sur un côté de la deuxième tige de poussée (133), et ladite étape consistant à commander la partie de poussée (12) pour qu'elle se déplace de la troisième position à la quatrième position comporte les étapes consistant à :
commander le fonctionnement de l'ensemble de transmission (13) afin qu'il entraîne la deuxième tige de poussée (133) pour qu'elle se déplace, pour permettre à la partie de poussée (12) de se déplacer de la troisième position à la quatrième position ; et en réponse à la détermination, sur la base d'un signal provenant du quatrième détecteur de position (22), comme quoi la partie de poussée (12) est dans la quatrième position, commander l'ensemble de transmission (13) pour qu'il cesse de fonctionner, afin de maintenir la partie de poussée (12) dans la quatrième position.

8. Dispositif de distribution (10), comportant : un tube d'alimentation (23) ayant un canal d'alimentation (14) ; un premier bloc mobile (16) et un deuxième bloc mobile (17) qui sont disposés dans le tube d'alimentation (23) et espacés l'un de l'autre, le premier bloc mobile (16) et le deuxième bloc mobile (17) étant configurés pour débloquer ou bloquer le canal d'alimentation (14) ; et un dispositif de commande configuré pour : commander le premier bloc mobile (16) afin qu'il se déplace pour débloquer le canal d'alimentation (14), et maintenir le deuxième bloc mobile (17) en état de blocage du canal d'alimentation (14), pour permettre à une tablette de détergent sur le premier bloc mobile (16) de tomber entre le premier bloc mobile (16) et le deuxième bloc mobile (17) ; et commander le deuxième bloc mobile (17) afin qu'il se déplace pour débloquer le canal d'alimentation (14), et maintenir le premier bloc mobile (16) en état de blocage du canal d'alimentation (14), pour permettre à la tablette de détergent entre le premier bloc mobile (16) et le deuxième bloc mobile (17) de tomber du canal d'alimentation (14) ;
comportant par ailleurs : un ensemble d'entraînement (18) relié au premier bloc mobile (16) et au deuxième bloc mobile (17), l'ensemble d'entraînement (18) étant configuré pour entraîner le premier bloc mobile (16) et le deuxième bloc mobile (17) pour qu'ils se déplacent, dans lequel le dispositif de commande est par ailleurs configuré pour : par la commande du fonctionnement de l'ensemble d'entraînement (18), entraîner le premier bloc mobile (16) pour qu'il se déplace dans une direction afin de débloquer le canal d'alimentation (14), et entraîner le deuxième bloc mobile (17) pour qu'il se déplace afin de bloquer le canal d'alimentation (14) ; et par la commande du fonctionnement de l'ensemble d'entraînement (18), entraîner le premier bloc mobile (16) pour qu'il se déplace dans une direction afin de bloquer le canal d'alimentation (14), et entraîner le deuxième bloc mobile (17) pour qu'il se déplace afin de maintenir le canal d'alimentation (14) dans un état débloqué,
**caractérisé en ce qu'**il comporte par ailleurs une première tige de poussée (183) reliée au premier bloc mobile (16), et un premier détecteur de position (24) disposé sur un côté de la première tige de poussée (183), la première tige de poussée (183) étant reliée à l'ensemble d'entraînement (18), dans lequel : quand la première tige de poussée (183) est située dans une première position, le premier bloc mobile (16) permet de débloquer le canal d'alimentation (14), et le dispositif de commande est par ailleurs configuré pour : commander le fonctionnement de l'ensemble d'entraînement (18) afin qu'il entraîne la première tige de poussée (183) pour qu'elle se déplace dans une direction approchant le premier détecteur de position (24) ; déterminer, sur la base d'un signal provenant du premier détecteur de position (24), si la première tige de poussée (183) est en contact avec le premier détecteur de position (24) ; et en réponse à une détermination comme quoi la première tige de poussée (183) est en contact avec le premier détecteur de position (24), commander l'ensemble d'entraînement (18) pour qu'il cesse de fonctionner.

9. Dispositif de distribution selon la revendication 8, comportant par ailleurs la première tige de poussée (183) reliée au premier bloc mobile (16), et un deuxième détecteur de position (25) disposé sur un côté de la première tige de poussée (183), la première tige de poussée (183) étant reliée à l'ensemble d'entraînement (18), dans lequel : quand la première tige de poussée (183) est située dans une deuxième position, le canal d'alimentation (14) est bloqué par le premier bloc mobile (16), et le dispositif de commande est par ailleurs configuré pour : commander le fonctionnement de l'ensemble d'entraînement (18) afin qu'il entraîne la première tige de poussée (183) pour qu'elle se déplace dans une direction approchant le deuxième détecteur de position (25) ; déterminer, sur la base d'un signal provenant du deuxième détecteur de position (25), si la première tige de poussée (183) est en contact avec le deuxième détecteur de position (25) ; et en réponse à une détermination comme quoi la première tige de poussée (183) est en contact avec le deuxième détecteur de position (25), commander l'ensemble d'entraînement (18) pour qu'il cesse de fonctionner.

10. Dispositif de distribution (10) selon la revendication 8, comportant par ailleurs :
un ensemble de détection (26) situé entre le premier bloc mobile (16) et le deuxième bloc mobile (17), dans lequel le dispositif de commande est par ailleurs configuré pour : détecter, par l'ensemble de détection (26), si la tablette de détergent est présente entre le premier bloc mobile (16) et le deuxième bloc mobile (17) ; et en réponse à la présence de la tablette de détergent entre le premier bloc mobile (16) et le deuxième bloc mobile (17), commander le fonctionnement de l'ensemble d'entraînement (18) afin qu'il entraîne le deuxième bloc mobile (17) pour qu'il se déplace dans la direction de déblocage du canal d'alimentation (14), pour permettre à la tablette de détergent entre le premier bloc mobile (16) et le deuxième bloc mobile (17) de tomber du canal d'alimentation (14).

11. Dispositif de distribution (10) selon la revendication 8, comportant par ailleurs : une partie de poussée (12) et un tube de stockage (11) ayant un canal de stockage (111), le canal de stockage (111) étant configuré pour stocker une tablette de détergent, dans lequel le dispositif de commande est par ailleurs configuré pour commander la partie de poussée (12) afin qu'elle se déplace pour permettre à la tablette de détergent dans le canal de stockage (111) de tomber dans le canal d'alimentation (14).

12. Dispositif de distribution (10) selon la revendication 11, dans lequel : la partie de poussée (12) est située entre le canal d'alimentation (14) et le canal de stockage (111), et est mobile entre une troisième position et une quatrième position, et le dispositif de commande est par ailleurs configuré pour : détecter si le canal de stockage (111) contient la tablette de détergent ; et, en réponse à la détection comme quoi le canal de stockage (111) contient la tablette de détergent, commander la partie de poussée (12) afin qu'elle se déplace de la troisième position à la quatrième position, pour permettre à la tablette de détergent dans le canal de stockage (111) de tomber du canal de stockage (111).

13. Dispositif de distribution (10) selon la revendication 12, comportant par ailleurs :
une deuxième tige de poussée (133) reliée à la partie de poussée (12), et un troisième détecteur de position (21) disposé sur un côté de la deuxième tige de poussée (133), dans lequel le dispositif de commande est par ailleurs configuré pour : déterminer, sur la base d'un signal provenant du troisième détecteur de position (21), si la deuxième tige de poussée (133) est en contact avec le troisième détecteur de position (21) ; et en réponse à une détermination comme quoi la deuxième tige de poussée (133) est en contact avec le troisième détecteur de position (21), commander la partie de poussée (12) pour qu'elle cesse de fonctionner, comportant par ailleurs de préférence un ensemble de transmission (13) relié à la deuxième tige de poussée (133), et un quatrième détecteur de position (22) disposé sur un côté de la deuxième tige de poussée (133), dans lequel le dispositif de commande est par ailleurs configuré pour : commander le fonctionnement de l'ensemble de transmission (13) afin qu'il entraîne la deuxième tige de poussée (133) pour qu'elle se déplace, pour permettre à la partie de poussée (12) de se déplacer de la troisième position à la quatrième position ; et en réponse à la détermination, sur la base d'un signal provenant du quatrième détecteur de position (22), comme quoi la partie de poussée (12) est dans la quatrième position, commander l'ensemble de transmission (13) pour qu'il cesse de fonctionner, pour maintenir la partie de poussée (12) dans la quatrième position.

14. Appareil ménager (1000), comportant : une cavité (1001) ; et un ensemble formant corps de porte (100) comportant : un corps de porte (101) ; et le dispositif de distribution (10) selon l'une quelconque des revendications 7 à 12, dans lequel le dispositif de distribution (10) est disposé sur le corps de porte (101), dans lequel : la cavité (1001) a un espace de réception (1002) ; l'ensemble formant corps de porte (100) est relié de manière rotative à la cavité (1001) ; l'espace de réception (1002) est en mesure d'être ouvert ou fermé par l'ensemble formant corps de porte (100) par une rotation de l'ensemble formant corps de porte (100) ; et le dispositif de distribution (10) est situé à l'intérieur de l'espace de réception (1002) quand l'espace de réception est fermé par l'ensemble formant corps de porte (100).
